# EUROPÄISCHE PATENTSCHRIFT

(11) **EP 3 736 602 B1**
(45) Veröffentlichungstag und Bekanntmachung des Hinweises auf die Patenterteilung: **23.06.2021**
(21) Anmeldenummer: 19172793.2
(22) Anmeldetag: 06.05.2019
(51) Int. Cl.: G01S 7/481, G01S 7/483, G01S 7/4861, G01S 7/4913, G01S 17/10, G01S 17/32, G01S 17/42, G01S 17/89, G01S 7/4863, G01S 7/4914, G01S 17/26

(54) **AUTOMATISCHES AUFFINDEN VON ZIELMARKEN**
AUTOMATIC DETECTION OF TARGETS
RECHERCHE AUTOMATIQUE DE MARQUES CIBLES

(43) Veröffentlichungstag der Anmeldung: 11.11.2020
(73) Patentinhaber: Hexagon Technology Center GmbH, 9435 Heerbrugg (CH)
(72) Erfinder: HINDERLING, Jürg, CH-9437 Marbach (CH); BESTLER, Simon, 88085 Langenargen (DE); KIPFER, Peter, CH-9443 Widnau (CH); GESER, Markus, CH-9326 Horn (CH); WALSER, Andreas, CH-9000 St.Gallen (CH)
(74) Vertreter: Kaminski Harmann

(56) Entgegenhaltungen:
- EP-A1- 3 199 913
- EP-A1- 3 330 741
- EP-A1- 3 336 576
- EP-A2- 1 329 691
- CH-A5- 676 042

## Beschreibung

Die Erfindung betrifft eine Zielreflektor-Suchvorrichtung und ein Verfahren zur automatischen Zielerfassung nach dem Oberbegriff des Anspruchs 1 bzw. des Anspruchs 13, sowie speziell auch ein Vermessungsgerät, welches zum automatischen Auffinden von reflektierenden Zielmarken ausgebildet ist.

Die vorliegende Erfindung betrifft ein automatisches Auffinden von zurückreflektierenden Zielmarken für ein Vermessungsgerät mittels einer optisch-elektronischen Einrichtung. Derartige automatische Zielfinder, auch als ATR (Automatic Target Recognition) oder Power-Search bezeichnet, sind beispielsweise aus CH 676042, EP 1 329 691, US 6,031,606, EP 1 422 499 oder EP 1 876 416 bekannt. Diese Zielreflektor-Suchvorrichtungen scannen mit einem Suchlicht-Fächer automatisch ihre Umgebung nach retroreflektierenden Objekten ab, welche dann infolge vom Vermessungsgerät zur exakten geodätischen Vermessung automatisch angezielt werden können.

Es ist eine Aufgabe der vorliegenden Erfindung, eine derartige Zielreflektor-Suchvorrichtung, einen Zielfinder oder eine Zielerfassungseinheit zu verbessern - speziell in einem Vermessungsgerät wie z.B. einer Totalstation, aber auch in einem Theodolit, Tachymeter, Laserscanner, Laser-Tracker, Laser-Nivellier oder ähnlich aufgebauten Geräten.

Speziell kann dabei eine schnellere und/oder genauere Erfassung von reflektierenden Zielen angestrebt werden, insbesondere wobei neben einer zweidimensionalen Richtung auch eine Distanz zum Ziel zu ermitteln ist. Dabei sollten auch die Möglichkeiten zur Unterscheidung von Fehlreflexen und tatsächlichen Messzielen weiter verbessert und möglichst automatisiert werden.

Diese Aufgaben werden erfindungsgemäß durch die Merkmale der unabhängigen Ansprüche und/oder durch Merkmale der abhängigen Ansprüche gelöst bzw. diese Lösungen weitergebildet.

Dabei wird vom Zielfinder, welcher als separate Einheit ausgebildet oder in ein Vermessungsgerät integriert sein kann, ein Lichtfächer ausgesendet. Beispielsweise wird eine, sich über einen vorgegebenen Winkelbereich erstreckende und vorzugsweise durchgängige oder zumindest in wesentlichen durchgängige, in einer ersten Richtung ausgerichteten Licht- oder Laserlinie ausgesendet, vorzugsweise im Wesentlichen entlang einer Geraden. Dieses Aussenden des Lichtfächers kann dabei zum Beispiel mit einer entsprechenden strahlformenden, abbildenden refraktiven, katadioptrischen oder diffraktiven Optik erfolgen, welche das emittierte Licht (z.B. von einer einzelnen oder von mehreren Halbleiterlichtquellen wie LEDs oder Lasern) zu einer Linie formt, ausgebildet sein. Alternativ kann das Aussenden des Lichtfächers auch mit einer Scan-Bewegung eines ablenkenden Elements erfolgen. Neben einer kontinuierlichen Aussendung kann dabei auch eine zeitlich gepulste Aussendung des Lichts erfolgen.

Dieser Lichtfächer ist dabei in einer, nicht mit der ersten Richtung zusammenfallenden, zweiten Richtung bewegbar, beispielsweise im Wesentlichen orthogonal zu einer Längsrichtung des Lichtfächers. In einer Ausführungsform kann dabei der Lichtfächer in der zweiten Richtung um einen Winkelbereich verdreht oder geschwenkt werden, vorzugsweise um bis zu 360°. Beispielsweise kann dabei die Lichtquelle und/oder deren Optik bewegt werden, oder es kann eine Ablenkeinheit für das ausgesendete Licht (wie z.B. ein Spiegel oder ein Prisma) bewegt werden. Damit ist mit dem Lichtfächer ein Raumwinkelbereich abscannbar, beispielsweise ein kegel- oder pyramidenförmiger Raumwinkelbereich oder eine (oftmals symmetrische) Kugelzone. Bei der Bewegung des Lichtfächers kann dabei mit einem Encoder oder einer anderen Sensoreinrichtung eine aktuelle Lage der Bewegung erfasst oder gemessen werden, insbesondere zumindest in der zweiten Richtung.

Bei einer Ausführungsform eines in seiner Geometrie theodolitenartig ausgebildeten Vermessungsgeräts (z.B. einer Totalstation oder einem Laserscanner) kann dabei die SendeEinheit für den Lichtfächer derart angeordnet sein, dass der Lichtfächer mit dem Vermessungsgerät verdrehbar ist - speziell um die Stehachse. So kann etwa die Sendeeinheit im Oberbau, der Alhidade (also z.B. am Fuß oder in einer der Stützen) oder auch am bzw. im Teleskopkörper oder Fernrohr angeordnet sein, sodass der Lichtfächer mit diesem Teil des Vermessungsgeräts bewegt wird. Optional kann der Lichtfächer auch um die Kippachse bewegbar sein - etwa, wenn dieser am oder im Fernrohr ausgesendet wird. In einer speziellen Ausführungsform kann der Lichtfächer beispielsweise auch im Wesentlichen koaxial durch das Fernrohr ausgesendet werden. Mit den Winkelencodern der entsprechenden Theodolitenachsen kann dabei eine Richtung des ausgesendeten Lichtfächers bestimmt werden.

Trifft zumindest ein Teil des ausgesendeten Lichtfächers auf ein reflektierendes bzw. retroreflektierendes Objekt, so wird zumindest ein Teil des ausgesendeten Lichts zurückgeworfen, und kann mit einer Empfangseinheit des Zielfinders detektiert werden. Die Empfangseinheit weist dabei eine Empfangsoptik und einen optoelektronischen Detektor auf, und kann dabei z.B. koaxial oder biaxial zur Sendeeinheit ausgebildet sein. Ein Gesichtsfeld der Empfangseinheit ist hierbei derart ausgebildet, dass dieses mit dem ausgesendeten Lichtfächer zusammenfällt oder dieses abdeckt - zumindest im Wesentlichen oder auch exakt. Beispielsweise kann dieses mit einem optischen System mit einer entsprechenden Anordnung und Ausbildung von optischen Komponenten, wie Linsen, Blenden, diffraktive Strukturen, etc. erfolgen.

Der optoelektronische Detektor ist dabei ortsauflösend und speziell derart angeordnet und ausgebildet, dass mit diesem eine Ortsauflösung innerhalb des Lichtfächers, also z.B. entlang der projizierten Laserlinie entlang der ersten Richtung, durchführbar ist.

Damit kann eine Auswerteeinheit bei Bewegung des Lichtfächers über einen Raumbereich, eine Lage eines zurückreflektierenden Ziels innerhalb dieses abgescannten Raumbereichs in der ersten Richtung anhand der Ortsauflösung und in der zweiten Richtung anhand einer zugehörigen Richtung der Bewegung ermitteln.

In einer Ausführungsform kann der Lichtfächer auch dazu genutzt werden, um eine zumindest grobe Distanz zum zurückreflektierenden Ziel zu ermitteln. Dabei geht es nicht um eine exakte Vermessung der Distanz mit geodätischer Genauigkeit, also kein Vermessen mit der vollen Messgenauigkeit des eigentlichen Vermessungsgeräts. Es kann jedoch zumindest grob - im Verhältnis zur Messgenauigkeit des Vermessungsgeräts, also z.B. etwa mit einer Genauigkeit im Bereich von im Zentimetern - mittels der Zielreflektor-Suchvorrichtung eine Distanz ermittelt werden. Beispielsweise kann dieses mit einer Auswertung einer Laufzeit des Lichts von der Zielerfassungseinheit zum reflektierenden Ziel und zurück erfolgen. Etwa, indem der Lichtfächer in Form von amplituden- oder zeitintervall-modulierten Lichtpulsen ausgesendet wird und zwischen dem Aussenden des Lichtfächerpulses und dem Empfangen eines zurückgeworfenen Anteils des Lichtfächerpulses eine Zeitdifferenz ermittelt wird, womit aus dieser Laufzeit auf Basis der der Ausbreitungsgeschwindigkeit des Lichts ein Distanzwert ermittelt wird. Um eine derartige Bestimmung der Distanz durchzuführen, ist die Empfangseinheit entsprechend ausgebildet, um derartige Laufzeiten im Bereich von Nanosekunden oder darunter erfassen zu können.

Um dabei den Raumbereich bei schnellem Bewegen des Lichtfächers in der zweiten Richtung hinreichend hochauflösend mit einer Schar von Lichtfächern abdecken zu können, ist eine entsprechend schnelle Auswertung der Empfangseinheit anzustreben. Zudem muss zugleich die Auswertung des optoelektronischen Detektors in der ersten Richtung mit einer hinreichend hohen Ortsauflösung durchführbar sein, um auch die erste Richtung mit einer für diesen Zweck hinreichenden Auflösung abdecken zu können. Auch können in der Praxis durchaus auch zeitgleich mehrere Reflexionen innerhalb eines der Lichtfächer auftreten, welche es durch die Auswerteeinheit entsprechen möglichst zu erkennen und zu separieren gilt. Mit herkömmlichen CCD- oder CMOS-Sensoren oder auch PSDs als optoelektronischen Detektoren können diese Anforderungen - speziell in ihrer Zusammenschau - nur unzureichend erfüllt werden.

Die vorliegende Erfindung betrifft speziell eine Zielreflektor-Suchvorrichtung, welche zum automatischen Auffinden von wenigstens einer (insbesondere retro-) reflektierenden Zielmarke durch ein geodätisches Vermessungsgerät ausgebildet ist. Diese Vorrichtung weist dabei eine Sendeeinheit auf, welche zur Beleuchtung der Zielmarke eine optische Strahlung in Form eines, in einer ersten Richtung orientierten Sendefächers emittiert. Dieser Sendefächer kann dabei vorzugsweise als Ebene ausgebildet sein, sodass die Projektion in den Suchraum linienförmig, speziell als Gerade ausgeformt ist, und z.B. mit einem Öffnungswinkel von in etwa +/-5 bis +/-20 Grad in der ersten Fächerrichtung und orthogonal dazu als vorzugsweise kollimierte Lichtlinie mit zumindest weniger als +/-1 Grad, vorzugsweise schmaler als +/-0.05 Grad Öffnungswinkel ausgebildet sein. In einer Ausführungsform kann bei einer stationierten Totalstation als Vermessungsgerät die Ausrichtung des Sendefächers z.B. im Wesentlichen parallel zur Stehachse (also im Regelbetrieb im Wesentlichen vertikal) sein und sich insbesondere über einen Winkelbereich von z.B. etwa +/-20° gegenüber einer Horizontalrichtung erstrecken.

Des Weiteren ist eine motorisierte Einrichtung zur Bewegung des Sendefächers entlang einer zweiten Richtung vorhanden. Diese kann als ein dezidierter Teil der Vorrichtung oder auch Teil des Vermessungsgeräts ausgebildet sein. Diese ist zur Bewegung des Sendefächers über einen Raumbereich entlang der zweiten Richtung und zur Erfassung eines Werts der zweiten Richtung ausgebildet. Die zweite Richtung fällt dabei nicht mit der ersten Richtung zusammen und ist vorzugsweise im Wesentlichen orthogonal zur ersten Richtung orientiert. Beispielsweise kann bei obenerwähnter Totalstation die Bewegung als eine Drehung über einen Winkelbereich um eine vertikal orientierte Stehachse ausgebildet sein, vorzugsweise also z.B. ein im Wesentlichen horizontales Schwenken des Sendefächers über den zu erfassenden Raumbereich, speziell um bis zu 360 Grad.

Die erfindungsgemäße Vorrichtung weist dabei auch eine Empfangseinheit auf, welche mit einem optoelektronischen Detektor zurückreflektierte Anteile der optischen Strahlung des Sendefächers als Rückreflexe empfängt. Speziell gilt es dabei die Rückreflexe von der reflektierenden Zielmarke zu erfassen - in der Praxis werde aber leider oft nicht nur diese, sondern auch unerwünschte Störreflexe von anderen reflektierend wirkenden Objekten im Raumbereich empfangen.

Dieses Empfangen erfolgt dabei innerhalb eines fächerförmigen Erfassungsbereichs, welcher auch als Empfangsfächer bezeichnet wird. Der Empfangsbereich wird dabei mit dem Sendefächer mitbewegt und kann derart ausgebildet sein, dass dieser im Wesentlichen der Ausrichtung und Ausdehnung des Sendefächers entspricht oder diesen umfasst.

Die Vorrichtung weist zudem eine Ortungseinheit auf, welche mit einer Auswertung der Empfangseinheit und anhand der Werte der zweiten Richtung eine Position des Rückreflex bestimmt. Diese Position im Raumbereich kann dabei speziell als Koordinate in einem Koordinatensystem der Zielreflektor-Suchvorrichtung oder im Koordinatensystem des Vermessungsgeräts bereitgestellt werden, beispielsweise als Lage des Zielreflektors in der ersten und zweiten Richtung, in obigem Beispiel also etwa in Form einer horizontalen Lage und einer vertikalen Lage des Zielreflektors.

Entsprechend der vorliegenden Erfindung ist dabei der optoelektronische Detektor als ortsauflösender optoelektronischer Detektor mit einer Linienanordnung von mehreren photosensitiven Pixeln oder Sensorelementen ausgebildet. Die Pixel sind dabei jeweils als SPAD-(Single Photon Avalanche Photodioden)-Array-Erfassungseinheiten ausgebildet, welche pro Pixel jeweils mit mehreren im Geiger-Modus betriebenen und zu einem gemeinsamen Ausgangssignal zusammengeschalteten Single Photon Avalanche Photodioden (SPADs) ausgebildet sind. Derartige SPADs werden auch als MPPC-(Multi Pixel Photon Counter) oder SPM-(Semiconductor PhotoMultiplier) oder allgemein als Semiconductor Photomultiplier bezeichnet, und z.B. unter anderem in US 2016/0005913, US 2017/0242136, US 2016/0181293, US 2013/0099346, WO 2014/180487, US 9,087,936 in Funktion und beispielhaften Ausführungsformen beschrieben sind.

Der Detektor weist dabei eine vorzugsweise gerade Aneinanderreihung von zumindest mehr als zumindest zwei solcher Pixel auf, welche als Einzelbauteile oder gemeinsam als monolithisches Bauteil ausgebildet sein können. Erfindungsgemäß werden dabei aber nicht hunderte oder mehr von Pixeln genutzt, sondern eine z.B. gegenüber klassischen CCD-Zeilen oder Kameras verhältnismäßig geringe Anzahl von Pixeln, also beispielsweise etwa weniger als 33 Pixel, vorzugsweise weniger als 17 Pixel, speziell zum Beispiel etwa 5 bis 16 Pixel. Die Sensitivitätsflächen dieser Pixel sind dabei in der Linienanordnung vorzugsweise zumindest annähernd lückenlos aneinandergereiht, also beispielsweise mit einem Abstand zwischen den Sensitivitätsflächen der Pixel von weniger als 20% der Sensitivitätsflächengröße in Linienrichtung, vorzugsweise von weniger als 10% oder noch weniger, bis hin zu einem Abstand von Null oder annähernd Null. In einer beispielhaften Ausführungsform kann ein als SPAD-Array ausgebildetes Pixel von der Größenordnung her als ein zumindest in etwa quadratisches Pixel mit etwa 1 mm Kantenlänge ausgebildet sein. Bei deren Auswertung kann gegenüber herkömmlichen APDs zumeist auf eine Verstärkerstufe, speziell einen TIA, verzichtet werden. Auch ist im Vergleich zu CMOS oder CCD basierten Systemen eine höhere Bandbreite, insbesondere im Bereich >1GHz realisierbar. Damit lässt sich unteranderem das SNR verbessern und/oder eine bessere Unterdrückung von Umgebungslicht erzielen, beispielsweise von Sonnenlicht auf einer Baustelle. Im Vergleich zu klassischen Photosensoren lässt sich auch eine sehr hohe Amplituden-Dynamik durch nichtlineare Kompression des Signals erzielen. Im Gegensatz zu einem aufintegrierten Signal eines CMOS oder CCD Sensors, liefert ein SiPM in Echtzeit (Realtime) ein direktes Zeitsignal und ermöglicht eine Picosekundenauflösung eines empfangenen Lichtpulses, was beispielsweise auch für eine präzise Entfernungsmessung vorteilhaft ist.

Die mehreren einzelnen Single Photon Avalanche Photodioden eines als SPAD-Array ausgebildeten Pixel sind dabei zu einem einzigen Ausgangssignal pro Pixel zusammengeschaltet. Beispielsweise können die Photodioden mit jeweils einem Serienwiderstand versehen sein und diese Serienschaltungen dann zu einem Pixel-Ausgangssignal parallelgeschaltet sein.

Die Empfangseinheit weist auch ein optisches System mit einer abbildenden Fixfokus-Optik auf, z.B. mit zumindest einer optischen Linse oder Linsengruppe. In einer Ausführungsform kann zum Beispiel mit einer abbildenden Einzellinse der gesamte Objektraum des fächerförmigen Empfangsbereichs in einen Bildraum bzw. in eine Bildebene abgebildet werden.

Das optische System und der optoelektronische Detektor sind dabei derart angeordnet und ausgebildet, dass aus dem Erfassungsbereich zurückgeworfene Anteile der optischen Strahlung auf der Sensitivitätsfläche des optoelektronischen Detektors derart aufgeweitet sind, dass eine unscharfe Abbildung erfolgt. Die Anordnung und Ausbildung des optischen Systems und des Detektors ist erfindungsgemäß also derart ausgestaltet, dass Licht von einem Punkt im Erfassungsbereich, gegenüber einer optimalen Fokussierung abweichend, auf einem nicht minimalen Flächenbereich am Detektor auftrifft. Umgekehrt ausgedrückt, ist ein, in den Objektraum abgebildeter Erfassungsbereich eines der Pixel dabei derart ausgebildet, dass dieser sich mit dem Erfassungsbereich eines benachbarten Pixels teilweise überlappt.

In einer alternativen Ausführungsform kann die Empfangsoptik derart ausgelegt sein, dass in der Bild- oder Brennebene eine Diffusorplatte angeordnet ist, beispielsweise als ein dünnes Mikrolinsenarray oder Hologramm mit hoher Transmission. Unmittelbar hinter der Diffusorplatte kann sich dabei die Sensitivitätsfläche des optoelektronischen Detektors befinden. Diese Anordnung des optischen Systems und des Detektors kann dabei erfindungsgemäß speziell derart ausgestaltet werden, dass Licht von einem Punkt im Erfassungsbereich zwar in der Brennebene scharf abgebildet wird, jedoch auf der Detektionsfläche des optoelektronischen Detektors einen gewissen Flächenbereich einnimmt, welcher grösser ist als die scharfe Abbildung. In anderen Worten überlappen sich damit die Randzonen der Erfassungsbereiche zweier benachbarter Pixel teilweise. Derartiges kann beispielsweise Vorteile in Bezug auf beherrschen von Backgroundlicht, reduzieren oder verhindern eines Randabfalls der Helligkeit und/oder Vermeidung einer virtuellen Zwischenabbildungen der Sensorfläche im Objektraum bringen.

Damit wird die Position des Rückreflex in der ersten Richtung mit einer Auswertung des optoelektronischen Detektors und anhand der, insbesondere zeitlich, zugehörigen zweiten Richtung bestimmt. Die bestimmte Position kann dann dem Vermessungsgerät bereitgestellt werden, welches infolge diese Position mit seiner Fernrohr- oder Laser-Zielachse exakt anzielen und in bekannter Weise vermessen kann.

Das optische System kann dabei in einer Ausführungsform mit einem, gegenüber einer Fokusebene der abbildenden Optik um einen definierten Versatz nach vorne oder nach hinten versetzten Detektor ausgebildet sein. Insbesondere können dabei also die Pixel gegenüber dem Fokus bzw. Brennpunkt der Optik defokussiert angeordnet sein. Speziell können etwa die abbildende Optik und die Pixel derart ausgebildet und angeordnet sein, dass Licht von einem Punkt aus einem vor der abbildenden Optik liegenden Objektraum eine Fläche auf dem hinter der abbildenden Optik liegenden SPAD-Array-Zeile beleuchtet, wobei diese Fläche bewusst grösser ist als der, sich durch die Qualität des optischen Systems bedingte, minimale Zerstreuungskreis. Insbesondere kann diese Fläche in einer Ausführungsform in etwa zumindest gleichgroß oder grösser als eine Sensitivitätsfläche eines der Pixel sein. Anders ausgedrückt kann der photosensitive Bereich des linienförmigen Detektors derart defokussiert angeordnet sein, dass einfallende elektromagnetische Strahlung im Wesentlichen homogen über einen zusammenhängenden Sensitivitätsbereich der Pixel verteilt wird.

In einer weiteren Ausführungsform kann in oder etwas vor der Brennebene der weitwinkligen Empfangsoptik der Empfangseinheit ein Mikrolinsenarray angeordnet sein. Dieses Mikrolinsenarray ist mit einer Anzahl lückenlos aneinanderliegenden zylindrischen Stablinsen ausgebildet, welche den Erfassungsbereich in Richtung des Laserfächers definiert erweitern. Die Pixel der SPAD-Array-Zeile sind vom Objektraum her gesehen hinter diesem astigmatischen Mikrolinsenarray platziert. Ein empfangenes Lichtbündel des an sich abbildenden Empfangsobjektivs wird damit unmittelbar vor der Detektionsfläche der SPAD-Array-Zeile in die erste Richtung leicht aufgeweitet. Damit beleuchtet das Licht von einem Punkt aus dem, vor der abbildenden Optik liegenden Objektraum eine elliptische Fläche auf dem, hinter der abbildenden Optik liegenden SPAD-Array-Zeile. Dabei ist diese Fläche bewusst grösser ausgelegt als der Zerstreuungskreis der Punktübertragungsfunktion des abbildenden Empfangsobjektivs.

In einer Ausführungsform kann das optische System der Empfangseinheit dabei eine einzelne, auf den fächerförmigen Erfassungsbereich bildfeldbegrenzenden Schlitzblende zwischen der abbildenden Optik und dem Detektor aufweisen. Speziell handelt es sich dabei in einer Ausführungsform um eine Gesichtsfeld bestimmende Schlitzblende, bei welcher der Spalt so breit ist, dass ein Winkelbereich von mindestens der Breite des Öffnungswinkel des Sendelichtfächers in der ersten Fächerrichtung zu sehen ist, also einer Art von Feldblende oder Gesichtsfeldblende. Dabei kann das optische System auch einen vorzugsweise schmalbandigen, spektralen Filter aufweisen, welcher primär für eine spezifische Wellenlänge des vom Zielbeleuchter emittierten Lichts (z.B. im Infrarotbereich) durchlässig ist. In einer anderen Ausführungsform kann die Schlitzblende dabei auch derart ausgebildet sein, sich eine Beugung an dem Spalt (bzw. den Spalten) der Schlitzblende zur spektralen Separation einer spezifischen Wellenlänge Zielbeleuchter-Lichts auf den Detektor zunutze gemacht wird.

Beispielsweise kann dabei die Optik derart ausgebildet und angeordnet sein, dass eine Fokussierung eines Objektraums der abbildenden Optik in (oder zumindest im Wesentlichen auf einen Bereich um) eine Ebene der Schlitzblende erfolgt, und die Pixel defokussiert in einem definierten Abstand hinter der Ebene der Schlitzblende angeordnet sind - also im sogenannten Backfokus. Dabei kann insbesondere der definierte Abstand derart gewählt sein, dass ein Zerstreuungskreis der Defokussierung im Wesentlichen einer Breite der Pixel orthogonal zur Pixelreihenanordnung (bzw. der Blendenschlitzrichtung oder Fächerrichtung) entspricht, oder der definierte Abstand kann derart gewählt sein, dass ein Zerstreuungskreis durch die Defokussierung im Wesentlichen einer Höhe eines der Pixel in der Pixelreihenanordnung (bzw. der Fächerrichtung oder Blendenschlitzrichtung) entspricht.

Das optische System kann zusätzlich oder alternativ auch mit einem optischen Diffusor-Element zwischen der abbildenden Optik und dem Detektor ausgebildet sein. Ein derartiges Diffusor-Element kann dabei speziell ein diffus lichtdurchlässiges optisches Bauteil sein, etwa ausgebildet als eine Streuscheibe oder Mattscheibe, als Opalglas oder Milchübergangglas, als zylindrischer Mircolinsenarray, aber auch eine Strukturstreuscheibe mit Lichtleitstruktur oder eine holographische Streuplatte sein.

In einer Ausführungsform kann die Ausbildung und Anordnung des optischen Systems und des Detektors derart erfolgen, dass der zurückgeworfene Anteil der optischen Strahlung von einem Punkt aus dem fächerförmigen Empfangsbereich von mehr als einem der Pixel empfangen wird, insbesondere stets von mehr als einem der Pixel empfangen wird. Die absichtlich unscharf ausgebildete Abbildung des Punkts auf dem Detektor bewirkt also eine Aufweitung des Punktes auf dem Detektor, sodass Licht von diesem Punkt - speziell wenn der abgebildete Punkt in einem Bereich des Übergangs zwischen zwei Pixel auf dem Detektor zu liegen kommt - von mehr als einem der Pixel erfasst wird. In einer Ausführungsform kann die Auslegung Beispielsweise speziell derart erfolgen, dass Licht des Punkts, welches nicht über eine Hälfte eines Pixels des Detektors hinausgeht stets auch zumindest zu einem Teil von einem benachbarten Pixel empfangen wird. Dabei kann vor den Pixeln jeweils ein individueller oder gemeinsamer optischer Diffusor vorhanden sein, welcher auch bei einem nur teilweise beleuchteten Pixel das Licht im Wesentlichen über die gesamte Sensitivitätsfläche des Pixels - also über die mehreren Photodioden des SPAD-arrays des Pixels - verteilt, vorzugsweise zumindest annähernd homogen verteilt.

Anders ausgedrückt kann der ortsauflösende optoelektronische Detektor dabei einen optischen, praktisch verlustfreien Strahlaufweiter aufweisen, welcher derart ausgebildet und angeordnet ist, dass die zurückgeworfene elektromagnetische Strahlung von einem Objektraumpunkt eine Fläche auf dem Sensorelement beleuchtet, insbesondere wobei die Optik mit einem Strahlaufweiter vor jedem der Pixel ausgebildet ist In umgekehrter Richtung betrachtet kann ein, zu einem der Pixel zugeordneter Bereich oder Sektor des Erfassungsbereichs (also jener Bereich des Objektraums, aus welchem dort emittiertes Licht von diesem Pixel detektierbar ist) mit jenem eines benachbarten Pixel zumindest teilweise überlappend ausgebildet sein, vorzugsweise z.B. um ca. 5% bis 50% überlappend.

In einer Ausführungsform der Erfindung kann dabei die Auswertung der Ortungseinheit derart ausgebildet sein, dass eine Position in der ersten Richtung - also entlang des fächerförmigen Erfassungsbereichs - mit einer empfangsintensitätsabhängig ermittelten, interpolierten Auswertung der elektrischen Ausgangssignale von mehreren Pixeln erfolgt. Beispielsweise mit einer Empfangsintensitäts-Schwerpunktbildung basierend auf den Ausgangssignalen von mehreren der Pixel, oder mit einer nach einer mathematischen Funktion, z.B. einer linearen, Mittelung einer Zwischenposition zwischen zwei Pixeln anhand einer Signalstärke an ihren Pixel-Ausgängen. Die Ortungseinheit ist dabei also speziell derart ausgebildet, um eine Ortsauflösung in der ersten Richtung zu ermitteln, welche die Anzahl der Pixel übertrifft, sodass mehr Orte entlang des Empfangsfächer aufgelöst werden, als Pixel vorhanden sind. Dabei kann beispielsweise eine erste Empfangsintensität von einem ersten Pixel und eine zweite Empfangsintensität von einem danebenliegenden zweiten Pixel ermittelt werden. Das Ermitteln kann dabei vorzugsweise für alle der Pixel parallel ablaufen, also beispielsweise mit jeweils einem individuellen elektronischen Empfangskanal für jedes der Pixel, welche parallel und nicht sequenziell ausgewertet werden. Dabei kann speziell pro Pixel eine Information über den Zeitpunkt des Eintreffens eines Empfangslichtpulses, sowie eine Information über die Intensität des Empfangslichtpulses ermittelt werden. Anhand des Zeitpunkts kann dabei über eine Time-Of-Flight (TOF) Auswertung eine Distanz des Reflektors ermittelt werden. Bei hinreichend unterschiedlichen Zeitpunkten für die benachbarten ersten und zweiten Pixel kann angenommen werden, dass diese von in der Distanz gestaffelten, unterschiedlichen Reflexionsquellen stammen, und daher nicht zusammengehörend zu betrachten sind. Bei gleichem oder zumindest im wesentlichen gleichem Zeitpunkt bei erstem und zweitem Pixel kann angenommen werden, dass es sich um denselben Reflex von demselben Reflektor handelt. Damit kann eine zusammengehörige Betrachtung erfolgen, bei welcher anhand der Empfangsintensität beim ersten und zweiten Pixel einer Gewichtung erfolgt, anhand welcher eine Lage des Rückreflexes, speziell des Zentrums des Rückreflexes, zwischen den optischen Achsen des Strahlengangs der ersten und zweiten Pixel als Position des Rückreflexes ermittelt wird. Analoges kann auch bei zwei benachbarten Pixeln in der zweiten Richtung erfolgen (mit einer Betrachtung der Zeitpunkte jeweils relativ zur Aussendung des zugehörigen Sendefächer-Pulses), womit auch eine Lage des Rückreflexes in der zweiten Richtung zwischen den benachbarten Sendefächern ermittelt werden kann. Analoges kann auch über mehr als zwei hintereinandergereihte, beleuchtete Pixel und/oder Sendefächer erweitert werden.

In einer Ausführungsform kann dabei die Ortungseinheit auch derart ausgebildet sein, dass die Auswertung in der zweiten Richtung mit einer empfangsintensitätsabhängigen Schwerpunkt- oder Mittelwertbildung basierend auf den Ausgangssignalen der einzelnen Pixel bei benachbarten Werten der zweiten Richtung erfolgt. Somit kann eine Ortsauflösung in der zweiten Richtung ermittelt werden, welche die Anzahl der erfassten zweiten Richtungen übertrifft, sodass entlang der zweiten Richtung mehr Orte entlang der Bewegung des Empfangsfächers aufgelöst werden, als Empfangsfächer-Pulse ausgesendet wurden - also etwa auch eine dem Rückreflex zugeordnete zweite Richtung, welche zwischen jenen zweiten Richtungen liegt, in welchen die Lichtfächer-Pulse ausgesendet wurden bzw. von welchen sie empfangen wurden. Um auch kleine Reflektormarken bei großen Distanzen noch zuverlässig auffinden zu können, muss der Objektraum möglichst lückenlos abgescannt werden. In einer Ausführungsform zur Abdeckung solcher Fälle, sollten die Lichtfächer dabei in der zweiten Richtung eine gewisse Mindestbreite (bzw. einen Mindest-Öffnungswinkel) aufweisen, oder alternativ im Fall von schmalen Lichtfächern, ist eine ausreichend enge Scanndichte des Objektraums erforderlich, wobei die Scanndichte primär von der Pulsrate des Sendefächers und der Geschwindigkeit der Bewegung in der ersten Richtung bestimmt wird, bzw. muss die Pulsrate entsprechend hoch gewählt werden um eine gewünschte Scann-Geschwindigkeit zu erzielen. Beispielsweise erscheinen übliche Vermessungs-Reflektoren bei großen Distanzen vom Instrument gesehen im Winkel sehr klein, beispielsweise in der Größenordnung von etwa 0.0035 Grad. Um derartig kleine Ziele nicht zu verpassen, muss die Sendeeinheit in der zweiten Richtung den Objektraum vorzugsweise lückenlos oder zumindest mit einer Auflösung in der obengenannten Größenordnung erfassen. Daher wird der Sendefächer entsprechend mit Senderaten von etlichen kHz, beispielsweise von 50kHz oder darüber emittiert.

In einer Ausführungsform der Erfindung kann die Ortungseinheit mit einer Distanzmesseinheit ausgebildet sein, welche für jedes der Pixel und/oder für jeden Rückreflex zumindest einen Distanzmesswert ermittelt, insbesondere mit einer Laufzeit- oder Phasenmessung von Pulsen der emittierten optischen Strahlung des Sendefächers. Sowohl Laufzeit- als auch Phasenmessung können beispielsweise mittels der für den Fachmann bekannten Wellenformdigitalisierungstechnologie gemessen werden. Dabei kann insbesondere für einen Rückreflex der optischen Strahlung eine Distanz ermittelt und als Teil der Position bereitgestellt werden. Zusätzlich kann aus der gemessenen Signalamplitude und Distanz der Reflexionsgrad als charakteristischer Parameter des reflektierenden Zielobjekts abgeleitet werden. Allenfalls kann dabei auch eine Tiefe in Distanzrichtung anhand einer zeitlichen Dauer eines Rückreflexes bzw. Pulsverbreiterung des empfangenen Rückreflexes ermittelt werden. In diesem Bezug können die erfindungsgemäß genutzten SPADs bei den Pixeln mit ihren Empfangs-Charakteristika, speziell in Bezug auf Ihr Zeit-, Sensitivitäts- und Übersteuerungsverhalten Vorteile bringen. Besonders vorteilhaft ist bei SPAD-Arrays beispielsweise deren hohe elektrische Signalbandbreite von 1 bis 2GHz, mit welcher eine Zeitauflösung im Picosekundenbereich erzielbar ist, sowie deren Robustheit gegen Übersteuerung, beispielsweise bei Sonnenlicht.

In einer Ausführungsform kann die Ortungseinheit derart ausgebildet sein, dass eine Ausdehnung in der ersten Richtung als eine Höhe und/oder eine Ausdehnung in der zweiten Richtung als eine Breite eines jeweils räumlich zusammenhängenden Rückreflexes ermittelt werden, welcher als eine Information über eine Abmessung oder räumliche Ausdehnung des Reflektors bzw. der potentiellen Zielmarke als zusätzliche Information zur Position bereitgestellt wird. Dabei kann zum Beispiel die Position als Schwerpunkt oder Mittelpunkt des Rückreflexes (speziell der Empfangslichtintensitätsschwerpunkt oder der Mittelpunkt der sich mit Höhe und Breite ergebenden Fläche des Rückreflexes) sowie dessen Höhe und Breite bereitgestellt werden. Die Fläche des Rückreflexes kann dabei auch mit einer Neigung gegenüber der ersten und zweiten Richtung ermittelt werden, z.B. mit einer Höhe und/oder Breite sowie einer zugehörigen Neigung gegenüber der ersten oder zweiten Richtung - beispielsweise von einem gegenüber der ersten Richtung schräg liegenden, länglichen Reflektorstreifen auf einer Warnweste, etc. Optional oder alternativ können für einen zusammenhängenden Rückreflex auch mehrere Positionen - z.B. Eckpunkte oder eine Kontur - ermittelt werden, an welchen die Intensität des Rückreflex einen Schwellwert überschreitet, wobei der Schwellwert fix oder dynamisch nachgeführt sein kann. Dabei wird speziell auch die beschriebene Auswertung der Position(en) mit einer Auflösung zwischen den Pixeln angewandt.

Erfindungsgemäß kann die Auswerteeinheit derart ausgebildet sein, dass die erste Position in der ersten Richtung, die zweite Position in der zweiten Richtung, die Höhe in erster Richtung, die Breite in zweiter Richtung, die Distanz anhand einer Signallaufzeitinformation, sowie eine Intensität des Rückreflex, als ein räumliches Intensitätsprofil des Rückreflexes, ermittelt werden, bzw. infolge entsprechend bereitgestellt und/oder ausgewertet werden. Damit kann der Rückreflex erfindungsgemäß beispielsweise in seiner Raumrichtung, Entfernung, Ausdehnung und Intensität charakterisiert werden, womit eine detailliertere Auswertung und/oder Klassifizierung und/oder Identifikation des Rückreflex, sowie allenfalls auch bezüglich seiner Quelle, also der Beschaffenheit des Reflektors ermittelt und bereitgestellt werden.

Die Auswerteeinheit kann beispielsweise ein räumliches 6D-Profil des Rückreflex mit erster Position, zweiter Position, Distanz, Höhe, Breite und Intensität von erfassten Rückreflexen bestimmen, und auf Basis dieses Profils für jeden empfangenen Rückreflex eine automatische Zielmarkenerkennung und/oder Zielmarkenidentifikation durch die entsprechend konfigurierte Auswerteeinheit ermitteln. So kann in einer Ausführungsform die Auswerteeinheit etwa derart ausgebildet sein, dass mit einer Auswertung der Distanz- und Intensitätswerte eine Eindeutigkeitslösung von Retro Targets wie Prismen und Reflektor-Tapes, Katzenaugen, ... ermittelt wird, beispielsweise anhand eines Vergleichs mit bekannten oder gespeicherten Daten und Kennwerten von Reflexionsquellen, anhand von durch Maschinenlernen entsprechend trainierten Künstlichen Intelligenz Systemen oder neuronalen Netzwerken, etc. Bei der Auswertung kann dabei auch eine Distanz- bzw. Tiefenstaffelung von Rückreflexen zur Unterscheidung von Reflexquellen berücksichtigt werden.

Ebenfalls betrifft die vorliegende Erfindung ein geodätisches Vermessungsgerät mit einer Vorrichtung zur automatischen Zielerfassung bzw. Zielsuche wie diese hier beschrieben ist, speziell zum Beispiel ein geodätisches Vermessungsgerät in Form einer Totalstation. Aber auch ein Vermessungsgerät in Form eines Theodolits, eines Tachymeters, eines Laserscanners, eines Rotationslasers oder eines LaserTrackers kann eine Ausführungsform der Erfindung darstellen. Dabei kann die Vorrichtung, insbesondere gemeinsam mit einem Teleskop oder einer Anzieleinrichtung oder auch eines Basiskörpers des Vermessungsgeräts, beispielsweise um eine - vorzugsweise zumindest im Wesentlichen vertikale - Stehachse des geodätischen Vermessungsgeräts als zweite Richtung drehbar angeordnet sein. Insbesondere kann die Zielreflektor-Suchvorrichtung etwa in der Stütze des geodätischen Vermessungsgeräts, speziell also um die Stehachse drehbar aber in der Kippachse unbeweglich, untergebracht sein.

Die Erfindung betrifft auch ein entsprechendes Verfahren zur automatischen Auffindung einer Position einer reflektiven Zielmarke, speziell wie oben beschrieben und insbesondere mit einer hier beschriebenen Vorrichtung oder einem geodätischen Vermessungs-gerät. Dabei erfolgt zumindest ein Aussenden von optischer Strahlung in Form eines Sendefächers, ein Bewegen des Sendefächers über einen Raumbereich, und ein Empfangen von einem Rückreflex eines Anteils der optischen Strahlung des Sendefächers innerhalb eines fächerförmigen Empfangsbereichs. Mit einem Auswerten eines fächerförmigen Empfangsbereichs mit einem optischen Detektor erfolgt dann ein Bestimmen der Position des Rückreflex anhand des Auswertens und einer zugehörigen Lage des Bewegens.

Erfindungsgemäß wird dabei der optische Detektor als ortsauflösender optischer Detektor mit einer Linienanordnung mehrerer Pixel ausgewertet, welche Pixel jeweils als SPAD-Arrays ausgebildet sind, und das Empfangen erfolgt mit einem optischen System mit einer abbildenden und richtungsauflösenden Optik. Dabei ist das optische System derart ausgebildet und angeordnet, sodass eine unscharfe, gegenüber einer fokussierten Abbildung aufgeweitete, Abbildung oder Projektion des Rückreflex aus dem Erfassungsbereich auf dem ortsauflösenden optischen Detektor erfolgt. Mit einer derartigen Ausführungsform kann anhand einer Auswertung einer Empfangsintensität über mehr als ein Pixel des Detektors hinweg eine Ortsauflösung der Position des Rückreflex ermittelt werden, welche grösser ist als die physikalische Ortsauflösung anhand der Anzahl der Pixel des Detektors.

Speziell kann dabei das Bestimmen der Position mit einem Ermitteln eines Intensitäts-Schwerpunkts des Rückreflex auf dem ortsauflösenden optischen Detektor über mehrere der Pixel hinweg mit einer Positionsauflösung erfolgen, welche höher ist als das Intervall zwischen zwei Pixeln. Das Bestimmen der Position kann zudem oder alternativ auch mit einem Ermitteln eines Intensitätsschwerpunkts des Rückreflex über mehrere nebeneinanderliegende Sendefächer hinweg mit einer Positionsauflösung erfolgen, welche höher ist als das Winkelintervall zwischen zwei Sendefächer. In anderen Worten kann ein spezieller Aspekt von vielen der hier angeführten Ausführungsformen der Erfindung auch darin gesehen werden, dass in einer Ausführungsform dabei die Zielsuche im Raumbereich schneller erfolgen kann, insbesondere mit einer geringeren Anzahl von Aussendungen von Sendefächern und Auswertungen von Pixeln. Bei der Auswertung kann dabei auch ein Ermitteln einer Distanz zu einem Rückreflex anhand einer Signallaufzeit eines optischen Pulses des Sendefächers erfolgen. Auch kann beim Auswerten des Detektors, insbesondere über mehrere nebeneinanderliegende Sendefächer hinweg, ein ermitteln einer Ausdehnung eines Rückreflexes im Raumbereich ermittelt werden.

Dabei kann auch ein Auswerten eines räumlichen Intensitätsprofils von Rückreflexen erfolgen, insbesondre in einer Position eines Intensitätsschwerpunkts des Rückreflexes, in einer Ausdehnung des Rückreflexes, und in einer Distanz des Rückreflexes. Dabei kann ein automatisches Erkennen und/oder Klassifizieren des Rückreflexes anhand des räumlichen Intensitätsprofil erfolgen, speziell ein Unterscheiden von räumlichen Intensitätsprofilen eines Vermessungsreflektors von räumlichen Intensitätsprofilen allfälliger Störreflexe.

Die Erfindung kann dabei zumindest teilweise von einer elektronischen Steuereinheit ausgeführt werden, welche zumindest teilweise programmierbar ist, beispielsweise mit einem Digitalrechner oder vergleichbaren Komponenten. Daher betrifft die vorliegende Erfindung auch eine Ausführungsform in Form eines Computerprogrammprodukts mit Programmcode, welcher auf einem physikalischen Datenträger gespeichert oder als elektromagnetische Welle (z.B. als mittels Funk übertragenes Datensignal) bereitgestellt wird, und zur Ausführung auf einem Digitalrechner ausgebildet ist. Erfindungsgemäß kann ein solcher Programmcode dabei speziell eine Folge von Instruktionen aufweisen, welche ausgebildet sind, um ein paralleles Auswerten von mehreren Pixeln eines linienförmigen ortsauflösenden Detektors, insbesondere in Bezug auf einen Empfangszeitpunkt und eine Empfangsintensität mindestens eines optischen Pulses, für mehrere nebeneinanderliegende, einen abzusuchenden Raumbereich abdeckende Lichtfächer durchzuführen. Dabei kann der Programmcode über mehrere Pixel und/oder Lichtfächer hinweg ein räumliches Intensitätsprofil für einen Rückreflex auswerten, speziell mit einer Position eines Intensitätsschwerpunktes des Rückreflex im Raumbereich, einer Ausdehnung des Rückreflex im Raumbereich, einer Distanz des Rückreflex im Raumbereich und/oder einer Intensität des Rückreflex. Dabei kann der Programmcode, insbesondere mit einem Vergleich mit bekannten Referenzprofilen und/oder einem Maschinenlern- oder Künstliche-Intelligenz-Ansatz aus einem entsprechenden verfügbaren Software-Framework, ein Erkennen und/oder Klassifizieren des Rückreflexes durchführen, speziell ein Erkennen und Unterscheiden eines Rückreflexes eines Messreflektors von einem allfälligen Störreflex.

Das erfindungsgemäße Verfahren und die erfindungsgemäße Vorrichtung werden nachfolgend anhand von, in den Zeichnungen schematisch dargestellten, konkreten Ausführungsbeispielen rein beispielhaft näher beschrieben, wobei auch auf weitere Vorteile der Erfindung eingegangen wird. Im Einzelnen zeigen:
Fig. 1 eine schematische Darstellung einer ersten beispielhaften Ausführungsform der vorliegenden Erfindung in einem geodätischen Vermessungsgerät;
Fig. 2 einer zweiten beispielhaften Ausführungsform der vorliegenden Erfindung in einem geodätischen Vermessungsgerät;
Fig. 3 eine erste schematische Darstellung eines beispielhaften Aufbaus einer Ausführungsform der Erfindung;
Fig. 4 eine zweite schematische Darstellung eines beispielhaften Aufbaus einer Ausführungsform der Erfindung;
Fig. 5 eine dritte schematische Darstellung eines beispielhaften Aufbaus einer Ausführungsform der Erfindung;
Fig. 6 eine vierte schematische Darstellung eines beispielhaften Aufbaus einer Ausführungsform der Erfindung;
Fig. 7 eine Illustration eines Beispiels einer Erfassung einer Zielmarkensuche in einer Ausführungsform der Erfindung;
Fig. 8a und Fig. 8b jeweils eine Illustration eines Beispiels einer Ausführungsform einer erfindungsgemäßen Erfassung bei einer Zielmarkensuche;
Fig. 9 Ausführungsformen einer erfindungsgemäßen Methode in Form eines Blockdiagramms.

Die Darstellungen in den Figuren dienen lediglich zur Illustration und sind, sofern nicht explizit angegeben, nicht als exakt maßstäblich zu betrachten. Gleiche oder funktionell ähnliche Merkmale sind, insoweit praktikabel, durchgängig mit denselben Bezugszeichen versehen und werden gegebenenfalls mit einem Buchstaben als Index unterschieden. Die dargestellten Schemata zeigen jeweils die technische Grundstruktur, welche von einem Fachmann entsprechend allgemeinen Grundsätzen ergänzt oder modifiziert werden können. Die Begriffe im Wesentlichen, substantiell, oder zumindest annähernd bringen dabei zum Ausdruck, dass ein Merkmal zwar vorzugsweise, aber nicht zwingend zu 100% exakt oder exakt wie wörtlich beschrieben ausgebildet sein muss, sondern das auch geringfügige Abweichungen zulässig sind - nicht nur in Bezug auf unvermeidliche praktische Ungenauigkeiten und Toleranzen, sondern speziell z.B. auch soweit dabei die für die Erfindung wesentliche technische Wirkung weitestgehend erhalten bleibt.

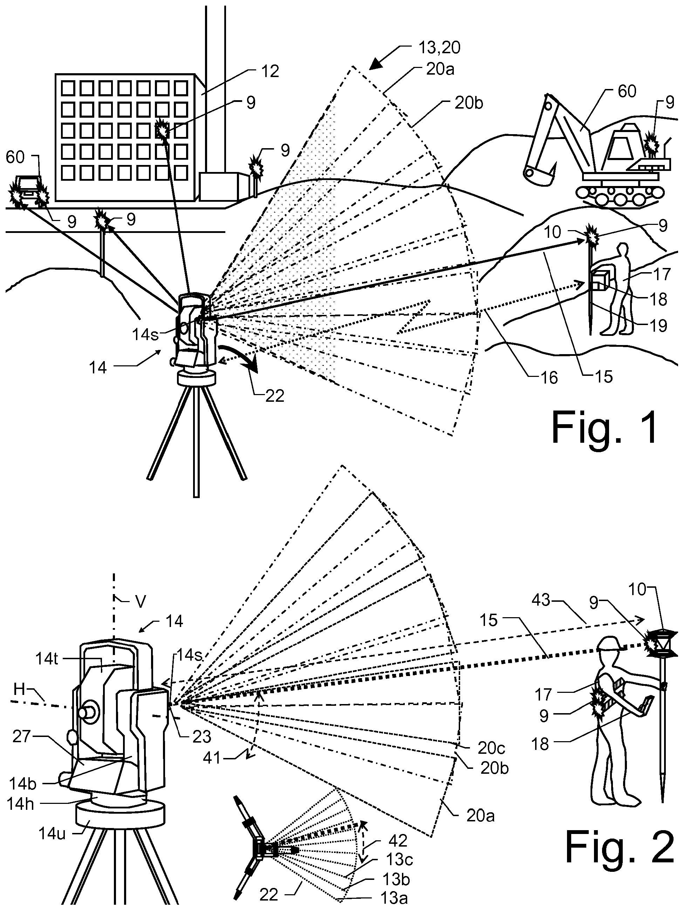

**Fig. 1** zeigt schematisch ein mögliches Beispiel einer Anwendung mit einer Ausführungsform einer erfindungsgemäßen automatischen Zielsucher-Vorrichtung 14s bei einem geodätischen Vermessungsgerät 14. Mit dem stationierten Gerät 14 soll dabei ein oder mehrere Vermessungsreflektoren - im gezeigten Beispiel etwa ein Reflektor 10 als Messpunkt in der Umgebung des Geräts 14 automatisch gefunden und Vermessen werden. Der Reflektor 10 kann als Vermessungsreflektor - etwa als Trippelprisma an einer Messlatte oder Lotstock 19 (hier auch mit einer über ein Funksignal 16 verbunden Bedieneinheit 18) - ausgebildet sein, welche von einem Benutzer 17 zu unterschiedlichen Messpositionen gebrachten wird. Dabei scannt die erfindungsgemäße Vorrichtung im oder am Vermessungsgerät 14 seine Umgebung nach Lichtreflexen 9 ab, um den Reflektor 10 zu lokalisieren. Infolge kann der Reflektor 10 mit der Zielachse 15 des Vermessungsgeräts 14 angezielt werden, um mit einem Laserentfernungsmesser in Richtung der Zielachse 15 den Reflektor 10 exakt zu vermessen. Vorzugsweise sollte dabei das Finden des zu vermessenden Reflektors 10 möglichst schnell und zuverlässig erfolgen. Beim Absuchen (auch als Scannen bezeichnet) der Umgebung wird aber im Allgemeinen nicht nur der Reflex 9 von der gewünschten Messlatte 19 erfasst werden, sondern auch andere Reflexionen 9 von sich allenfalls in der Umgebung befindlichen reflektierenden Objekten, wie weitere im Einsatz stehende Reflektoren, Gebäuden 12, Fahrzeugen 60, Scheinwerfern, Katzenaugen, Begrenzungspfählen, Verkehrszeichen, Sicherheitswesten von Arbeitern, Maschinen, etc.

Das Scannen oder Absuchen nach Reflexionen 9 erfolgt dabei mit einem modulierten, vorzugsweise gepulsten Aussenden eines Fächers 13 von optischer Strahlung im Sichtbaren oder unsichtbaren Spektralbereich und einem Erfassung und Auswertung von Rückreflexen 9 eines Teils dieser optischen Strahlung vom Standort des Reflektors 9. Beispielsweise wird ein Lichtfächer 13 in Form einer geraden Laser-Linie mit einem Öffnungswinkel z.B. etwa +/-20° vom Vermessungsgerät 14 emittiert, und dieser Lichtfächer 13 über den abzusuchenden Raumbereich 22 verdreht. Der Sendefächer 13 ist dabei vorzugsweise ein im Wesentlichen durchgängiger und im wesentlich homogener Lichtfächer 13, beispielsweise indem ein Lichtstrahl als vorzugsweise eine Ebene aufspannenden Fächer ausgesendet wird, welcher in Sichtrichtung am Objekt eine gerade Linie aufspannt.

In einer Ausführungsform kann der Lichtfächer 13 z.B. im Wesentlichen vertikal ausgerichtet sein und beispielsweise gemeinsam mit einer Anziel- oder Teleskopeinheit des Vermessungsgeräts 14 im Wesentlichen horizontal um die Stehachse des Geräts 14 durch eine motorisierte Antriebseinheit über einen abzusuchenden Raumbereich 22 gedreht oder geschwenkt werden, vorzugsweise um bis zu 360°. Die Erfindung kann in anderen Ausführungsformen aber auch mit anderen Ausrichtungen des Lichtfächers 13 und/oder oder Drehebenen der Bewegung des Lichtfächers 13, auch um weniger als 360°, ausgestaltet sein. Mit einem vorzugsweise gepulsten Aussenden des Lichtfächers 13 können dabei unter Einhaltung der Augensicherheit höhere optische Spitzenleistungen emittiert werden, womit auch stärkere Rückreflexe 9 erhalten werden und eine Verbesserung des SNR erzielbar ist. Dabei ergibt sich sozusagen ein Bündel von mehreren Sendefächern 13 oder eine Schar von Fächerbündeln, welche den abzusuchenden Raumbereich 22 abdecken. Insbesondere unter Betracht einer Aussendung des Sendefächers 13 in Form von zeitlichen Lichtpulsen mit Pulsbreiten von einigen Nanosekunden, wird der Raumbereich 22 also mit einem Bündel von diskreten Fächern abgetastet. Bei entsprechend schneller Abtastung bzw. bei einem entsprechenden Verhältnis der Abtastung zur Bewegung kann dabei aber auch eine quasikontinuierliche Abtastung des abzusuchenden Raumbereichs 22 erfolgen. Erfindungsgemäß sind beim Aussenden des Sendefächers 13 nicht nur simple Einzelpulsfolgen, sondern auch komplexere Modulationsarten, wie z.B. kodierte Pulsfolgen, Pulsamplitudenmodulation, Phasenmodulation usw. anwendbar. Wie auch schon weiter oben bezüglich der Abdeckung des Suchraums 22 erwähnt, sollte dabei die Rate der Distanzmessungen vorzugsweise mindestens 50kHz oder mehr, beispielsweise auch 500kHz oder noch mehr betragen um sowohl eine akzeptable Drehgeschwindigkeit der Bewegung des Sendefächers 13 als auch eine hinreichende Abdeckung des Suchraums 22 zu erzielen.

Gemeinsam mit dem Sendefächer 13 wird dabei auch ein fächerförmiger Empfangsbereich 20 der erfindungsgemäßen Vorrichtung mitbewegt, welcher vorzugsweise im Wesentliche in Größe und Raumlage in etwa dem Sendefächer 13 entspricht oder diesen umfasst. In einer Ausführungsform kann Empfangsbereich 20 des Empfangsfächers quer zur Fächerrichtung beispielsweise in etwa drei bis zehn Mal breiter ausgebildet sein als die Breite des Sendefächer 13. Dabei wird erfindungsgemäß der Empfangsbereich 20 mit einem ortsauflösenden optoelektronischen Sensorelement oder Detektor 11 ausgebildet, sodass eine erste Lage des Rückreflexes 9 entlang des Empfangsbereich-Fächers 20 - also in obigem Beispiel in vertikaler Richtung - erfassbar oder auswertbar ist.

Der fächerförmige Empfangsbereich oder Empfangsfächer 20 ist dabei vorzugsweise derart ausgelegt, dass dieser im Wesentlichen denselben Winkelbereich abdeckt wie der Sendefächer 13, insbesondere für im Vermessungswesen übliche, grösser Entfernungen von mehreren Metern, oder mehreren zig oder gar hundert Metern und mehr, insbesondere im Straßenbau.

Mit der erfindungsgemäßen Ortsauflösung des optoelektronischen Empfängers oder Detektors wird dabei der Empfangsfächer 20 bei der Auswertung in mehrere Fächer-Segmente 20a,20b,20c, usw. aufgeteilt. In anderen Worten wird die Ortsauflösung mit einem segmentieren des Empfangsfächers 20 entlang seiner Ausrichtung in mehrere Bereiche oder Segmente 20a,20b,20c,... erzielt, indem ein ortsauflösender elektrooptischer Detektor 11 mit einer Linienanordnung von mehreren, Pixeln 1 ausgebildet ist, insbesondere von mehr als zwei Pixeln. Die Anzahl der Pixel 1 in der vorliegenden Erfindung liegt dabei aber auch speziell unter 100, insbesondere unter 64 oder 32 Pixel. Beispielsweise kann eine Ausführungsform eines erfindungsgemäßen Detektor 11 etwa 5 bis 16 Pixel aufweisen. Diese Pixel sind entlang einer vorzugsweise geraden Linie in Fächerrichtung aneinandergereiht, wobei ein Abstand zwischen den Sensitivitätsflächen der Pixel möglichst bei null oder zumindest relativ klein im Verhältnis zur Größe der Sensitivitätsfläche des Pixels gehalten wird, vorzugsweise nicht größer als etwa 10%.

Erfindungsgemäß ist dabei die Anordnung eines optischen Systems der Empfangseinheit und des ortsauflösender elektrooptischer Detektor 11 derart ausgebildet, dass sich die Bereiche oder Fächer-Segmente 20a,20b,..., welche jeweils von einem Pixel erfasst werden, überlappen. Vorzugsweise sind diese Segmente 20a,20b,... dabei zumindest im Wesentlichen gleich groß. Mit anderen Worten - wie auch symbolisch im Strahlengang gezeigt - überlappen sich dabei die Projektionen der Sensitivitätsflächen der Pixel in die Objektebene.

Die erfindungsgemäßen Pixel sind dabei derart ausgebildet, dass jedes der Pixel als ein SPAD-Array ausgebildet ist. Ein solches SPAD Array weist dabei mehrere, im Geiger Modus betriebene Single Photon Avalance Photodioden (SPADs) auf, welche zu einem gemeinsamen Ausgangssignal für das Pixel zusammengeschaltet sind, insbesondere mit einer Parallelschaltung von jeweils mit einem Serienwiderstand versehenen SPAD - welche das SPAD-Array bilden. Anders gesagt, weisen die erfindungsgemäßen Pixel somit jeweils nur ein einziges Ausgangssignal pro Pixel auf, sind aber intern mit mehreren Photodioden pro Pixel aufgebaut. Statt einer Aneinanderreihung von mehreren individuellen Pixeln kann auch ein einziges, speziell gestaltetes herstellerspezifisches SPM-Diodenpixelarray angewandt werden, beispielsweise in Form eines Original Equipment Manufacturer (OEM) Produkt.

Erfindungsgemäß erfolgt dabei die elektrische und digitale Signalauswertung der Ortsauflösung nicht nur lediglich mit einer Auswertung eines einzelnen Pixels für sich, also mit einer einfachen Zuordnung eines Reflexes 9 zu einem einzigen der Pixel, sondern die Ortsaufauflösung in Fächerrichtung ist erfindungsgemäß größer als die physikalische Auflösung des Detektors 11 aufgrund der Anzahl der vorhandenen Pixel 1. Mit dem erfindungsgemäßen Überlappen der Sektoren oder Bereiche 20a,20b,... wird ein Rückreflex 9 von einem Reflektor 10 innerhalb des Erfassungsbereichs zumindest teilweise von mehreren Pixeln empfangen, wobei eine empfangsintensitätsabhängige Zwischenposition zwischen den Pixeln ermittelt wird, speziell indem ein relatives Verhältnis der Empfangsintensität von den Pixeln zu einer Zwischenposition ausgewertet wird, oder physikalisch eine Lage eines Schwerpunkts oder eines Maximalwerts des Rückreflexes 9 gebildet und entsprechend als Zwischenposition ausgewertet wird.

In einer erfindungsgemäßen Ausführungsform kann dabei die Auswertung der Ausgangssignale der Pixel parallel erfolgen, also über mehrere Erfassungskanäle, speziell mit je einem Kanal pro Pixel. Insbesondere kann dabei jedes der Pixel mit einem eigenen A/D-Wandler-Kanal ausgewertet werden, wobei die Taktung der A/D-Wandler-Kanäle vorzugsweise synchronisiert ist.

Eine erste Lage 41, als eine erste Koordinate jener ersten Richtung, aus welcher der Rückreflex 9 empfangen wurde, ist wie oben beschrieben mit der Auswertung des ortsauflösenden Detektors - zumindest grob - bestimmbar. Eine zweite Lage 42 des den Rückreflex 9 auslösenden Objekts 10 als eine zweite Koordinate in jener Richtung, aus welcher der Rückreflex empfangen wurde, ergibt sich aus der Lage der Bewegung des Sendefächers 13 im Raumbereich 22 zum Zeitpunkt des jeweiligen Lichtfächerpulses 13a,13b,13c,..., wie dies beispielhaft in **Fig. 2** illustriert ist. Dabei kann beispielsweise ein Winkelencoder im Gerät 14 die Ausrichtung der Bewegung des Sendefächers 13 erfassen, speziell zum Zeitpunkt der Emission des Sendefächers 13, zum Zeitpunkt des Empfangs des Rückreflex 9, oder zum Zeitpunkt der Refelxion (also etwa halber Zeit zwischen Emission und Empfang). Im gezeigten Beispiel kann zur Bewegung und Bestimmung der zweiten Lage der Antrieb und Winkelencoder 14h des Vermessungsgeräts 14 genutzt werden, welche zur Drehung des Geräts 14 gegenüber seiner Stationierung 14u um die Stehachse H (oder alternativ allenfalls auch um die Kippachse V) ausgebildet sind. Die Erfindungsgemäße Zielerfassungseinrichtung 14s kann dabei zum Beispiel in der nur einachsig beweglichen Stütze 14b des Vermessungsgeräts 14 oder auch im zweiachsig mit der Zielachse 15 beweglichen Teleskopkörper 14t ausgebildet sein.

Mit dem erfindungsgemäßen Detektor mit SPAD-Array kann in einigen Ausführungsformen auch darauf verzichtet werden, die Sendeleistung der Pulse des Sendefächers 13 zu variieren, wie dieses im Stand der Technik zum Beispiel oft in Form einer Aussendung eines Doppelpulses - etwa in Form einer Aussendung eines schwächeren Pulses direkt gefolgt von einem stärkeren Puls - angewandt werden muss, um dem beschränkten Signaldynamikumfang des Stands der Technik Systems gerecht zu werden.

Somit sind erfindungsgemäß Positions-Koordinaten des den Rückreflex 9 auslösenden Objekts 10 in zwei Dimensionen ermittelt, im obigen Beispiel also in einer horizontalen Lage (als zweite Lage 42 der aktuellen Ausrichtung des Sende-/Empfangsfächers) und einer vertikalen Lage (als erste Lage 41 in oder zwischen den Sektoren 20a,20b,20c,... des Empfangsfächers) des Reflexes 9 im Koordinatensystem des Geräts 14. Bei Ausführungsformen mit nicht vertikaler Ausrichtung der Zielsuchfächer und/oder nicht horizontaler Bewegung der Fächer können die Positionskoordinaten anhand der dabei vorliegenden geometrischen Beziehungen entsprechend umgerechnet werden.

Mit dem modulierten pulsförmigen Aussenden kann nicht nur die bereits erwähnte, höhere Spitzenleistung erzielt werden. Es ergibt sich dabei auch ein diskreter Zeitpunkt für das Senden des Lichtfächers 13, und somit ein diskreter Lichtfächer in eine diskrete Richtung der Bewegung in der zweiten Richtung. Zudem kann mit einer Distanzmesseinheit anhand einer Laufzeit und/oder Phasenlage des Lichtfächer-Lichtpulses 13a,13b,... vom Aussenden am Gerät 14, zum Reflex 9 am Objekt 10 und zurück zum Gerät 14 auf Basis der Ausbreitungsgeschwindigkeit des Lichts eine Distanz 43 zwischen Gerät 14 und Reflexionsobjekt 9 abgeleitet werden - bzw. mehrere Distanzen 43, falls mehrere Reflexe auftreten. Damit können die obengenannten Positions-Koordinaten des Rückreflexes 9 um eine dritte Dimension in Form eines Distanzwerts 43 ergänzt werden. Speziell kann die Distanzmesseinheit 23 dabei derart ausgebildet sein, dass diese auch in einem Mehrzielfall, bei welchem für einen einzigen Sende-Lichtimpuls mehrere in Ihrer Distanz gestaffelte Reflexe von mehreren Zielen empfangen werden, auch entsprechend auch mehrere Distanzen 43 ausgewertet werden. In einer Ausführungsform kann dabei speziell eine parallele Auswertung mit einer jeweils dezidierten Distanzmesseinheit 23 pro Pixel ausgebildet sein.

Eine vergleichsweise kürzere Pulsdauer kann oftmals eine vergleichsweise diskretere bzw. genauere Bestimmung der Position, insbesondere der radialen Position in Distanzrichtung bewirken, wobei eine minimal erforderliche, ausgesendete Pulsenergie, Spitzenleistung des Sendeelements, etc. hier oft in bekannter Weise limitierend sind. In praktischen Ausführungsformen muss hier bei der Auslegung eine ingenieurmäßige Abwägung aller Parameter und Auswirkungen auf Effektivität, Kosten, Nutzen, etc. erfolgen.

Bei einer analogen bzw. mit hinreichender Auflösung (von zumindest grösser zwei oder mehr) digitalisierten Erfassung einer Intensität oder Amplitude des Rückreflexes 9 am optoelektronischen Detektor kann neben den drei Positions-Koordinaten ein vierter charakteristischer Wert einem jeweiligen Rückreflex 9 bzw. dessen Quelle 10 zugeordnet werden.

In einer erfindungsgemäßen Ausführungsform kann ferner, neben der Position auch eine räumliche Ausdehnung eines zusammenhängenden Rückreflexes 9 ermittelt werden, beispielsweise etwa in Form einer Höhe in der ersten Richtung und einer Breite in der zweiten Richtung, bzw. in einer oder zwei Ausdehnungen eines Reflexes 9 in einer anderen Raumrichtung. Anhand einer solchen Ausdehnung können beispielsweise im Wesentlichen punktförmige Reflexe 9 durch Vermessungsprismen 10 von z.B. länglich ausgeformten Reflexen 9b von Reflektoren auf Warnwesten von Arbeitern 17, von großflächigen Reflexen an Fensterscheiben oder ähnlichem durch eine entsprechend ausgebildete Auswerteeinheit automatisch anhand der Ausdehnungen unterschieden werden. Bei der Ermittlung der Ausdehnung kann dabei vorzugsweise auch die Distanzinformation der Distanzmesseinheit berücksichtigt werden, womit auch eine Unterscheidung von Reflexen anhand deren Tiefenstaffelung erfolgen kann. Beispielsweise kann dabei etwa auch ein Trippelprisma 10 vor einer reflektierenden Glasscheibe im Hintergrund von einer Auswerteeinheit automatisch erkannt werden.

In einem Beispiel einer Ausführungsform einer Auswertung des erfindungsgemäßen Zielfinders, z.B. in einer Ortungseinheit 27, kann dabei also für einen erfassten Rückreflex eine mehr als dreidimensionale Information erfasst werden. Beispielsweise eine vierdimensionale Information mit Vertikalposition 41, Horizontalposition 42, Distanz 43 und Intensität und daraus ableitbar ein Reflexionsgrad des Zielobjekts 10. Dabei ist ein hierbei erfasster Reflex 9 in vielen Fällen nicht nur einer einzigen diskreten, zwei oder dreidimensionalen Raumkoordinate zugeordnet, welche sich beispielsweise in einem Intensitäts-Zentrum oder einem Intensitäts-Schwerpunkt des Rückreflexes 9 bestimmen lässt. In einer Ausführungsform der Erfindung kann vielmehr ein örtliches oder räumliches Reflex-Profil des Rückreflexes 9 ermittelt und ausgewertet werden. Beispielsweise kann zur Auswertung etwa in erster und zweiter Richtung ein Clustering von Intensitätswerten von Rückreflexen 9 erfolgen, oder auch ein Clustering der Intensität oder des Reflexionsgrads in drei Dimensionen - mit erster Richtung, zweiter Richtung und Distanz - wobei ein derartiges Intensitäts-Cluster mit zumindest einer (2D oder 3D) Position, vorzugsweise auch mit einer (2D oder 3D) Ausdehnung von einer Auswerteeinheit ermittelt wird. Somit kann etwa ein Reflex-Profil in örtlicher Nachbarschaft eines potentiellen Reflektors 10 ermittelt werden, speziell z.B. bei einer Reflexionsquelle 10 von nicht vernachlässigbarer Ausdehnung, wie etwa einem Reflektor-Streifen an Kleidung, einem Fenster, etc. Auch bei nichtvernachlässigbaren optischen Einflüssen der Luft wie etwa Flimmern, Dunst, Nebel, etc. - oder bei teildiffusen Reflexionen, Überstrahlen (Blooming), etc. - bringt eine derartige Auswertung in einer erfindungsgemäßen Zielsucheinrichtung Vorteile, speziell auch bezüglich einer Erkennung und Unterscheidung von diskreten, spezifischen Vermessungsreflektoren 10 in unterschiedlichsten Umgebungen und Umgebungsbedingungen.

Somit kann ein vier- oder höher- dimensionales Profil der Umgebung des Vermessungsgeräts 14 abgleitet werden, welches durch entsprechende Algorithmen - welche in klassischer Weise und/oder unter Einbindung von Maschinenlernen und künstlicher Intelligenz nach den Regeln der Kunst erstellt sein können - und eine Auswertung des Profils bereitstellen, welche derart ausgebildet ist, dass diese potentielle Zielreflektoren 10 erkennt, von potentiellen Stör- und Fehlsignalen unterscheidet und in einem bekannten Koordinatensystem verortet. Beispielsweise kann bei einem derartigen Profil oder Cluster auch eine Interpolation eines Reflexzentrums als Ort des Reflexes erfolgen, z.B. in Form eines berechneten Mittelpunkts, Schwerpunkts, Erwartungswerts, etc. Bei der Auswertung kann dabei auch eine räumliche Ausdehnung des Profils oder Clusters eines Rückreflexes 9 zur Unterscheidung von Fremdzielen (wie Sicherheitswesten, Verkehrstafeln, Glas- oder Lackflächen, Scheinwerfer, Katzenaugen, etc.) zum Ausschluss von Fehlzielen berücksichtig werden, wobei vorzugsweise auch eine allfällige Tiefenstaffelung von Reflexen 9 zur Ausblendung von Fehlreflexen berücksichtigt werden kann.

Ein Benutzer 17 mit dem Reflektor 10 kann dabei auch mit einer Bedieneinheit 18 über eine Funkverbindung 16 das Vermessungsgerät 14 aus der Ferne bedienen. In einer optionalen Ausführungsform kann dabei das Gerät 14 mittels der Funkverbindung eine grobe Bestimmung einer groben Richtung zum Reflektor 10 durchführen, beispielsweise um den Suchbereich 22 des erfindungsgemäßen automatischen Zielfinders auf eine definierte Umgebung zu dieser groben Richtung zu beschränken und/oder um den Reflektor 10 zu identifizieren und/oder von andere Reflexen 9 zu unterscheiden, welche potentiell mit dem Reflektor 10 des Benutzers 17 verwechselt werden könnten. Um diese grobe Richtung zu bestimmen, kann etwa eine grobe Radio-Ortung der mobilen Bedieneinheit 18 erfolgen, z.B. mit Diversity-Empfang mit mehreren Antennen aus der sich eine wahrscheinliche Richtung zum empfangenen Funksender ableiten lässt. Derartige Ansätze sind unter anderem auch in den (geplanten) Spezifikationen von Funkverbindungen wie Bluetooth (z.B. >5.0), WLAN, Mobilfunk, usw. bekannt. Auch kann eine Berücksichtigung einer Richtcharakteristik einer sich beim Bewegen des Geräts 14 mitbewegten Funkantenne, z.B. auch während dem Bewegen des Lichtfächers 13 (z.B. in der zweiten Richtung) zum Ableiten einer groben Richtung zur Bedieneinheit herangezogen werden, etwa an Hand einer Richtungsabhängigen der Empfangssignalstärke und/oder Phasenlage. Diese grobe Richtung kann dann mittels des erfindungsgemäßen Zielfinders verfeinert werden, bzw. kann damit ein Reflex 9 vom Reflektor 10 von anderen Reflexen 9 unterschieden werden. Auch kann die Bedieneinheit 18 mittels eines GPS-Empfängers oder Ortung in einem Mobilfunknetzwerk seine grobe Position selbst bestimmen, und diese über die Funkverbindung als Ausgangsbasis für die erfindungsgemäße Zielsuche, von der exakt oder zumindest grob bekannten Stationierung des Geräts 14 aus, bereitstellen.

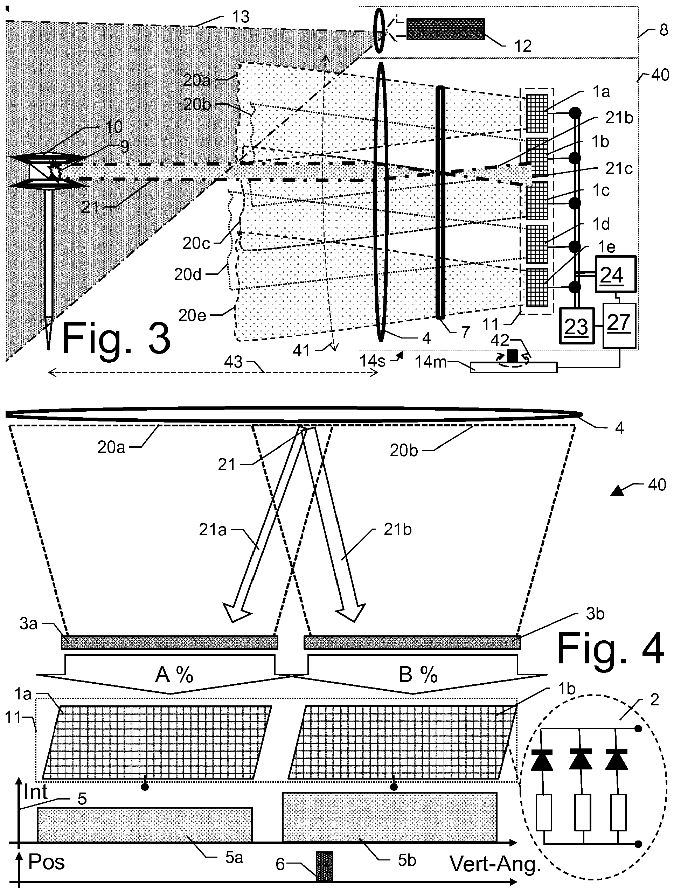

In **Fig. 3** ist Beispiel einer schematischen Schnitt-darstellung einer Ausführungsform einer erfindungsgemäßen Zielreflektor-Suchvorrichtung 14s gezeigt, bei welcher in einer Ortungseinheit 27 mit einer Auswertung der Empfangseinheit 40 und der zweiten Richtung 42 und vorzugsweise einer Distanz 43, eine Position des eine Rückreflex 9 auslösenden Objekts 10 bestimmbar ist. Dabei emittiert die Sendeeinheit 8 einen (in der Blattebene liegenden) Sendefächer 13. Dieser Lichtfächer 13 wird mittels einer Lichtquelle 12 und einer Sendeoptik in die abzusuchende Umgebung projiziert, und kann zwischen oder während des Aussendens der Lichtfächer 13, vorzugsweise motorisiert und mit einem Encoder 14m ausgestattet bewegt werden. Dabei getroffene, lichtreflektierende Ziele 10 in der Umgebung, wie z.B. der gezeigte Vermessungsreflektor 10, werfen dabei einen Anteil 21 des Lichts des Sendefächers 13 zurück zur erfindungsgemäßen Zielreflektor-Suchvorrichtung 14s. Eine Empfangseinheit 40 ist dort derart ausgebildet, dass dieses, von den Zielen 10 zurückreflektierte Licht 21 vom photoempfindlichen Detektor 11 erfasst wird, welcher entsprechende elektrische Signale zur weiteren Auswertung bereitstellen. Dabei ist die Empfangseinheit 40 derart ausgebildet, dass diese ebenfalls einen fächerförmigen Empfangsbereich 20 abdeckt, welcher vorzugsweise im Wesentlichen mit dem Sendefächer 13 überlappt. Erfindungsgemäß weist die Empfangseinheit 40 dabei eine abbildende Optik 4 auf, welche vorzugsweise als Fixfokus-Optik ausgebildet ist. Eine entsprechend ausgebildete und angeordnete Blende 7, z.B. ausgeformt als Schlitzblende, beschränkt dabei ein Gesichtsfeld der Empfangseinheit 40 auf den Empfangsfächer 20, z.B. wobei die Blende 7 in der Brennebene der Fixfokus-Optik 4 angeordnet sein kann.

Der photoempfindliche Detektor 11 ist dabei derart ausgebildet und angeordnet, dass dieser entlang des Empfangsfächers 20 ortsauflösend ausgebildet sind. Dabei sind mehrere diskrete Pixel 1a,1b,1c,1d,1e entlang einer Abbildung vom Empfangsfächer 20 im Objektraum hin zum Bildraum - also von außen betrachtet hinter der Optik 4 - angeordnet, sodass der Empfangsfächer 20 längs des Fächers in mehrere Empfangssegmente 20a,20b,20c,20d,20e aufgelöst wird. Erfindungsgemäß wird dabei zwar eine abbildende Optik 4 angewandt, der photoempfindliche Detektor 11 aber bewusst außerhalb des optimalen, abbildenden Schärfebereich der Optik 4 angeordnet, wie dies mit der unscharfen Abbildung 21b des Zurückreflektierten Lichtanteils 21. Erfindungsgemäß also beispielsweise also gerade eben nicht derart wie dieses etwa bei einem Bildsensor einer bildgebenden Kamera oder bei klassischen Anwendungen einer abbildenden Optik 4 der Fall wäre.

In einer erfindungsgemäßen Ausführungsform kann dabei die Anzahl der Pixel 1, also die Anzahl der individuell auslesbaren photoempfindlichen Sensoren für die Ortsauflösung entlang des Fächers 20 gering gehalten werden. Es sind erfindungsgemäß also nicht zwingend hunderte von Pixel 1 zur Ortsauflösung vorhanden, sondern es sind nur wenige Pixel 1 - beispielsweise sind etwa 5 bis 25 Pixel, speziell etwa 5 bis 15, oder z.B. etwa 10 Pixel hinreichend -, wobei jedes dieser Pixel 1 dabei aber als SPAD-Array ausgebildet ist. Ein derartiges Pixel 1 in Form eines einzelnen SPAD-Arrays weist dabei in sich mehrere (beispielsweise etwa 100 bis 10000 Stück) im Geiger-Modus betrieben photoempfindliche Zellen auf, welche zu einem einzigen, gemeinsamen Ausgang des Pixels 1 verschaltet sind. Erfindungsgemäß erfolgt dabei eine analoge Auswertung der jeweiligen Ausgänge der Pixel 1, vorzugsweise eine parallele Auswertung aller Pixel 1, was in einer Ausführungsform als eine simultane oder zumindest im Wesentlichen simultane oder quasi-simultane Auswertung ausgeführt werden kann. Die analoge Auswertung kann dabei auch unter Anwendung eines Analog-Digitalwandlers erfolgen, welcher eine wertdiskrete analoge Darstellung bereitstellt, insbesondere mit einer Auflösung von mehr als zwei, speziell von zumindest 16, zumindest 128 oder vorzugsweise noch mehr Wertquantisierungsstufen.

Die einzelnen Pixel 1 weisen dabei als SPAD-Arrays 1a,1b,1c,1d,1e auch jeweils eine entsprechend größere Sensitivitätsfläche auf, als eine einzelne Halbleiterphotodiode mit vergleichbar hoher elektronischer Signalbandbreite. Beispielsweise kann ein SPAD-Array mit einer Sensitivitätsfläche von etwa 1 x 1 Millimeter eine Signalbandbreite im Gigahertzbereich (GHz) aufweisen, was bei klassischen Photodioden bei vergleichbarer Größe nicht erreicht wird.

In einer erfindungsgemäßen Ausführungsform erfolgt die Auswertung der Ausgänge der Pixel dabei mit einer Distanzmesseinheit 23 mit Abtastfrequenz, welche hinreichend hoch ist, um eine Laufzeitmessung von ausgesendeten Lichtpulsen des Sendefächers 13 durchzuführen. Diese Distanzmesseinheit 23 weist dabei eine Distanzauflösung von zumindest im Dezimeterbereich, vorzugsweise im Zentimeterbereich auf, beispielsweise zumindest mit einer Abtastrate oder Sampling-Frequenz von mehr als einem Megahertz, beispielsweise im Bereich von etwa 80MHz oder mehr.

Die erfindungsgemäß mit der Empfangsfächerlängsrichtungs-Positionsbestimmungseinheit 24 auf Basis der Signale der wenigen Pixel 1a,1b,1c,1d,1e erzielte Ortsauflösung bzw. Winkelauflösung des Empfangsfächers in der ersten Richtung 41, übertriff dabei die grundlegende, von der Anzahl der Pixel 1 gegebene Auflösung, welche sich als gesamter Erfassungsfächerwinkel durch Anzahl Pixel 1 ergibt. Mit der erfindungsgemäßen Defokussierung, Strahlumformung oder Strahlaufweitung sowie paralleler analoger Auswertung kann dabei eine Ortsauflösung entlang des Empfangsfächers 20 erzielt werden, welche jener der Anzahl der vorhandenen Pixel 1 übersteigt. Dabei werden die analogen Signale, welche der Empfangsintensität pro Pixel 1 entsprechen, als Gewichtungen über mehrere aneinandergrenzende Pixel ausgewertet, wobei anhand der Verhältnisse der Intensitäten auf Zwischenpositionen des Auftreffpunkts des zurückgeworfenen Lichts zwischen den Pixeln 1 geschlossen wird, welche Zwischenpositionen die Ortsauflösung verbessern. Eine solche Zwischenposition kann dabei etwa durch Interpolation, Schwerpunktbildung, Erwartungswert-Berechnung, gelernte Künstliche-Intelligenz-Systeme, Modellbildungen, allenfalls auch spezifisch für unterschiedliche Typen oder Klassen von Messzielen oder Störreflexionen, etc. ermittelt werden. Neben der Zwischenposition kann dabei auch eine allfällige Ausdehnung der empfangenen Reflexion über mehre Pixel erfasst werden.

Bei der Signalauswertung der Pixel 1 kann nicht nur der Wert der analogen Ausgänge der Pixel 1, sondern mit der Distanzmesseinheit 23 zusätzlich auch die Auftreffzeit, oder in anderen Worten die Laufzeit oder die von dieser Laufzeit abhängige Distanz 43 zum Reflexionsziel 10, berücksichtigt werden, womit eine Distanz-Staffelung von Reflexionen 9 ermittelbar ist, und somit z.B. verhindert werden kann, dass z.B. ein Messreflektor 10 vor einer spiegelnden Glasscheibe als eine einzige Reflexion 9 erfasst wird, sondern es kann mit dem erfindungsgemäßen System anhand dieser Tiefenstaffelung der Reflexionen 9 und die Hintergrundreflexion von der Auswerteeinheit als getrennte Reflexionen 9 unterschieden werden. Mehrere Reflexionen 9 können somit anhand deren Tiefenstaffelung und optimal auch unterstützt durch Intensitätsprofile der Reflexe 9 (z.B. eines Histogramms einer Häufigkeitsdichte der Analogwerte über Richtung und/oder Zeit) bzw. anhand eines daraus abgeleiteten anhand Reflexionsgrads der Quelle des Reflexes 9 nicht nur differenziert werden, sondern optional auch identifiziert und/oder klassifiziert werden, beispielsweise als Messreflektor 10.

Die Intensitätsprofile können dabei nicht nur entlang der ersten Richtung 41 des Empfangsfächers 20 ausgewertet werden, sondern auch zusätzlich oder alternativ in der zweiten Richtung 42 der Bewegung des Empfangsfächers 20 über einen Raumbereich 22, beispielsweise anhand einer Positionsmessung einer Bewegung der erfindungsgemäßen Zielsuchvorrichtung 14s. Vorzugsweise ist dabei die Ortungseinheit 27 derart ausgebildet, dass diese ein Intensitätsprofil der Rückreflexe 9 in zwei Dimensionen, also z.B. - in erster Richtung 41 und zweiter Richtung 42 - in erster Richtung 41 und Distanz 43 - und/oder in zweiter Richtung 42 und Distanz 43 -, oder auch in drei Dimensionen, also - in erster Richtung 41, zweiter Richtung 42 und Distanz 42 - ermittelt und von der Ortungseinheit 27 ausgewertet werden. Das Auswerten kann dabei insbesondere derart erfolgen, dass die von den Pixeln 1a,1b,1c,1d,1e erhaltenen Analogwerte, sozusagen als vierte Dimension, als räumliches Profil - etwa über erste Richtung 41, zweite Richtung 42 und/oder Distanz 43 (bzw. Laufzeit) - ausgewertet werden. Speziell können dabei räumlich zusammenhängende Intensitätscluster identifiziert und voneinander abgegrenzt werden. Dabei können diese Intensitätscluster insbesondere derart ausgebildet sein, dass diese Cluster von Reflexionsgraden darstellen, speziell indem ein Distanzeinfluss aus den Intensitätswerten herausgerechnet wird, oder die Empfangssignale über deren jeweils zugehörigen Distanzwerte normiert werden. Ein derartiger Reflexionsgrad stellt dabei meist einen charakteristischen Zielobjektwert dar, anhand welchem ein Zielobjekt 10 identifiziert und/oder klassifiziert werden kann. Zu diesen Intensitäts- bzw. Reflektivitäts-Clustern kann ein Ort (z.B. in Form einer Position eines Schwerpunkts oder eines Erwartungswerts des Clusters) und/oder eine räumliche Ausdehnung (z.B. in Form einer Ausdehnung, Abmessung oder Standardabweichung des Clusters) und/oder eine geometrische Form des Clusters (z.B. einem Punkt, einer Linie, einer Fläche, und deren Position und allenfalls eine Lage der Form im Raum) von der Auswerteeinheit 23 ermittelt werden, anhand welcher die, zu den Clustern zugehörigen Reflexe 9 erkannt und allenfalls auch identifiziert und/oder klassifiziert werden können. Neben analytischen und modellierenden Auswertungen können dabei auch Ansätze aus dem Bereich Maschinenlernen und/oder Künstliche Intelligenz implementiert werden. Dabei können Trainingsdaten von typisch vorkommenden Reflektoren wie Messreflektoren 10, aber auch Fehlreflexe wie z.B. von Sicherheitswesten, Scheinwerfer, Glasscheiben, Spiegel, Katzenaugen, etc. aufgenommen und/oder virtuell simuliert werden, insbesondere unter variablen Umgebungsbedingungen, etc.

In **Fig. 4** ist ein Ausschnitt einer weiteren erfindungsgemäßen Ausführungsform in vereinfachter Weise dargestellt, welche beispielsweise einen optischen Diffusor oder ein Mikrolinsenarray 3a,3b im Strahlengang des Empfangsfächers 20 nutzt. Die beispielhafte Darstellung von nur zwei Pixeln 1 ist hier nicht als einschränkend, sondern vielmehr als Ausschnitt anzusehen, da eine erfindungsgemäße Vorrichtung vorzugsweise mehr als zwei Pixel 1 (jedoch auch nicht hunderte Pixel 1) aufweist. Dabei sind die Pixel 1a und 1b wieder in Form von SPAD-Arrays 2 ausgebildet, welche beispielhaft in Form von der schematischen Darstellung 2 sowie des Oberflächenmusters der SPAD-Arrays als Array-Gitter sowie einem gemeinsamen elektrischen Ausgang pro Pixel symbolisiert sind. Von dem, an der Empfangseinheit innerhalb des Empfangsfächers 20 eintreffenden Lichts 21 des Reflexes eines von der Sendeeinheit ausgesendeten fächerförmigen Lichtpulses, wird dabei ein erster Anteil 21a von A% von dem ersten Pixel 1a empfangen, was am Pixelausgang den analogen Intensitätswert 5a ergibt, zu einem Zeitpunkt, welcher der distanzabhängigen Laufzeit des Lichtpulses entspricht. Ein zweiter Anteil 21b von B% von dem ersten Pixel 1b empfangen, was am Pixelausgang den analogen Intensitätswert 5b ergibt, ebenfalls zu demselben Zeitpunkt, welcher der distanzabhängigen Laufzeit des Lichtpulses 21 entspricht. Dabei ist die Optik 4 der Empfangseinheit erfindungsgemäß derart ausgebildet und angeordnet, dass ein Punkt innerhalb des Empfangsfächers 20 im Objektraum auf eine nicht vernachlässigbar kleine Fläche auf der Anordnung der photosensitiven Pixel 1a,1b abgebildet wird. Diese kann wie zuvor erläutert mit einem bewussten defokussierten Anordnung der Pixel 1a,1b erfolgen, alternativ oder zusätzlich kann dabei aber auch ein hier gezeigter Diffusor oder Mikrolinsenarray 3a,3b hinter der abbildenden Optik 4, insbesondere vor den Pixeln 1a,1b angeordnet sein. Neben einem einzigen, durchgängigen Mikrolinsenarray oder Diffusor 3a,3b für alle Pixel la,lb, kann dabei auch ein getrennter Diffusor 3a bzw. 3b für jedes der Pixel 1a bzw. 1b angewandt werden, welcher auftreffendes Licht 21a,21b im Wesentlichen gleichmäßig - insbesondere gleichmäßiger als ohne diesen Diffusor - über die Sensitivitätsfläche des jeweiligen Pixels 1a,1b verteilt. Vorzugsweise wird dabei also Licht 21a bzw. 21b, welches auf einen Teilbereich des Pixels 1a bzw. 1b auftrifft, durch den Diffusor 3a bzw. 3b auf einen größeren Bereich des Pixels 1a bzw. 1b, insbesondere über das gesamte SPAD-Array des Pixels 1a bzw. 1b, verteilt.

Die jeweils den Pixeln 1a und 1b zugeordneten Segmente 20a und 20b des Empfangsfächers 20 überlappen sich dabei teilweise. Anhand der Intensitäts-Prozentsätze A% und B% kann dabei eine Auswertung der Lage des auftreffenden Reflexes 21 zwischen den beiden Pixeln 1a und 1b ermittelt werden. Im gezeigten Beispiel kann etwa die räumliche Position 6 des Auftreffens abgebildeten Reflexes 21 entlang der Aneinanderreihung der Pixel (von welchen hier ausschnittsweise 1a und 1b gezeigt sind) ermittelt werden, beispielsweise indem eine Interpolation anhand Intensitätsverteilung 5a und 5b erfolgt. Neben einer rein rechnerischen Interpolation kann dabei auch eine Lookup-Tabelle, Maschinenlernen, etc. angewandt werden. Somit ist eine Lage des Reflexes 21 innerhalb des Empfangsfächers 20 mit einer örtlichen Auflösung ermittelt, welche größer ist als jene, welche sich rein aus der Anzahl der Pixel 1 für diesen Erfassungsbereich 20 ergeben würde.

Besonders vorteilhaft kann dabei eine zeitliche Trennung von sich örtlich überlappenden Empfangssignalen 5a,5b bei der Auswertung angewandt werden. Bei dieser werden nur Signale über angrenzende Pixel 1a,1b interpoliert, bei welchen die Signale 5a 5b auf der Zeitachse praktisch zeitgleich (beispielsweise mit einem Zeitversatz von < 10ns) empfangen wurden - und somit (zumindest höchstwahrscheinlich) von einem und demselben reflektierenden Objekt 10 stammen. Auf diese Weise lassen sich unterschiedliche reflektierende Objekte 10 - selbst wenn diese in Sichtrichtung eng gestaffelt sind - im Rahmen der Auswertung in vergleichbar einfacher Art und Weise von der anderswo beschriebenen Ortungseinheit 27 automatisch unterscheiden.

In anderen Worten wird bei einer erfindungsgemäßen Empfangseinheit 40 der fächerförmige Empfangsbereich 20 mit einem ortsauflösenden Detektor 11 mit einer Reihe von Pixel 1 in mehrere Segmente 20,20b,... unterteilt. Dabei ist jedem Pixel 1a,1b,... eines der Segmente 20a,20b,... zugeordnet. Ein Erfassungsbereich 20a,20b eines der Pixel 1a,1b bildet also jeweils eines der Segmente 20a,20b aus. Erfindungsgemäß ist die Empfangseinheit 40 dabei derart ausgebildet, dass diese Erfassungsbereiche 20a,20b von nebeneinanderliegenden Pixeln 1a,1b sich im Objektraum vor der abbildenden Optik 4 teilweise überlappen. Eine Reflexion 9 im überlappenden Bereich dieser Erfassungsbereiche 20a,20b zweier Pixel 1a,1b resultiert dabei in einem Ausgangssignal an beiden beteiligten Pixeln 1a,1b. Dabei teilt sich das Licht 21 entsprechend der Position der Lichtreflexion 21 im Überlappungsbereich unterschiedlich auf die beiden Pixel 1a,1b auf, insbesondere ist die empfangene Intensität 21a,21b des Lichtes am Pixel 1a,1b abhängig vom Flächenanteil des Reflexes 21, welcher vom jeweiligen Pixel 1a,1b erfasst wird. Mit einem analogen Ausgangssignal des Pixels 1a,1b, welches von der empfangenen Intensität 5 abhängig ist, ist dabei erfindungsgemäß eine Position 6 des Rückreflexes 21 vom Zielobjekt 10 zwischen den beiden benachbarten Pixeln 1a,1b ermittelbar. Zudem kann in einer Zusammenschau der Intensität über beide Pixel 1a,1b auch eine Information über die Reflektivität und/oder Ausdehnung jenes Objekts 10 abgeleitet werden, von welchem das, von dessen Reflexion 9 zurückgeworfene Licht 21 herrührt. Diese Information kann dann herangezogen werden um abzuleiten, ob bzw. mit welcher Wahrscheinlichkeit die Reflexion von einer Vermessungs-Zielmarke 10 mit spezifischem und/oder bekannten Reflexionsgrad stammt oder ob es sich um eine anderweitige, unerwünschte Störreflexion handelt.

Mit der spezifisch gepulsten Aussendung des Sendefächers 13 kann dabei optional nicht nur eine Laufzeit der Lichtsignale vom Zielsucher 14s zur Reflexion 9 und zurück ermittelt werden. Diese ermöglicht auch eine Evaluation - und folglich auch ein elektrisches und/oder numerisches Unterdrücken oder Herausrechnen - von allfälligen Bias- oder Stör-Signalen, etwa durch Umgebungslicht, allfällige aktiven Lichtquellen im Erfassungsbereich, Grundemissionen der Umgebung etc., welche außerhalb der Zeit des Pulsempfangs empfangen werden bzw. im Wesentliche konstant empfangen werden. Beispielsweise kann somit auch eine Differenzbildauswertung des erfassten Raumbereichs 20 erfolgen. So kann etwa eine zeitliche Ableitung der Empfangssignale ausgewertet werden, etwa durch eine entsprechende numerische Filterung oder Auswertung der analogen, vorzugsweise digitalisierten Signale und/oder mit einer elektrischen Hochpassfilterung der analogen Ausgangssignale der Pixel, einer dynamischen Bias-Ansteuerung, etc.

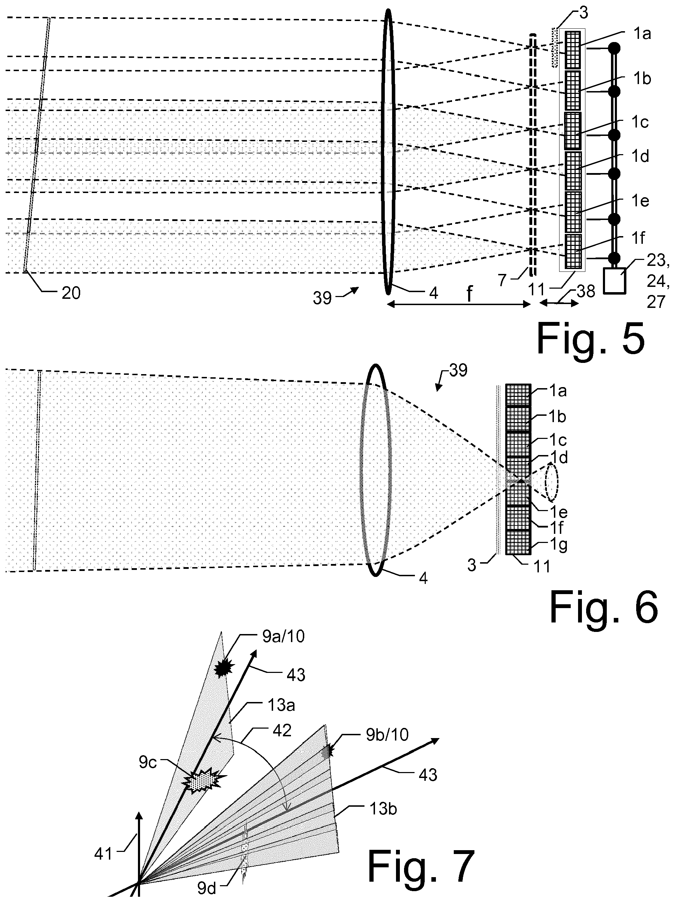

In **Fig. 5** ist nochmals ein Beispiel einer erfindungsgemäßen Erfassungseinrichtung gezeigt. Der optoelektronische Detektor 11 ist als ortsauflösender optoelektronischer Detektor 11 mit einer Zeile von SPAD-Array-Pixel 1a,1b,1c,1d,1e,1f ausgebildet und gemeinsam mit einer abbildenden Optik 4 dabei derart angeordnet und ausgebildet ist, dass ein Punkt aus dem fächerförmigen Empfangsbereich 20 (der hier auch in seinem Querschnitt angedeutet ist) unscharf auf den Pixel la,lb,lc,ld,le,lf abgebildet ist. Der Detektor 11 (bzw. die Ausgangssignale dessen Pixel 1) werden von einer Positionsbestimmungseinheit 24 für die Ortsauflösung in der Fächerlängsrichtung, einer Distanzmesseinheit 23 und einer Ortungseinheit 27 wie beschrieben ausgewertet.

Reflektierende Ziele 10, also insbesondere eine aufzufindende retroreflektierende Zielmarke, befinden sich dabei speziell innerhalb der hyperfokalen Distanz, also in einem Bereich derjenigen endliche Gegenstandsweite, bei welcher-Entsprechend zumeist fixen Fokus-Auslegung des optischen Systems - im Unendlichen liegende Objekte 10 ebenfalls gerade noch mit akzeptabler Unschärfe abgebildet werden können. Die sogenannte Schärfentiefe, reicht dann von der halben hyperfokalen Entfernung bis ins Unendliche. Erfindungsgemäß wird aber bewusst von einer scharfen Abbildung von Rückreflexen 9 von den Objekten 10, welche im Bereich der Schärfentiefe liegen, abgesehen. Stattdessen wird mit zum Beispiel mit einer definierten axialen Verschiebung 38 des Detektors 11 aus der eigentlich scharf abgebildeten Fokus-Ebene eine unscharfe Abbildung eines Reflexes vom Zielobjekt erzeugt.

Die obengenannte untere Grenze der Gegenstandsweite stellt im Rahmen der vorliegenden Erfindung vielfach kein wesentliches Hindernis dar, da die vorliegende Erfindung per se auf eine Auswertung einer unscharfen Abbildung ausgelegt ist und somit eine noch größere Unschärfe nur geringe negative Auswirkungen bezüglich Empfangssignalstärke und Richtungsauflösung zeigt. Im Nahbereich wird zudem meist ein größerer Teil des divergenten, fächerförmigen Erfassungsbereichs genutzt als im Fernbereich, womit das relative Auflösungsvermögen zumindest teilweise wieder kompensiert werden kann. Auch wird bei vielen Vermessungsgeräten ein solcher Nahbereich (z.B. von wenigen Metern) nicht oder nur selten genutzt.

In einem Beispiel einer Ausführungsform kann etwa, wie gezeigt, für eine Abbildung aus dem Unendlichen (bzw. einer dieser gleichwertigen Abbildung innerhalb des Schärfetiefenbereichs einer Fixfokus-Optik) in etwa die Bildweite identisch mit der Brennweite f der Optik angesetzt werden. Erfindungsgemäß kann in diesem Beispiel also eine abbildende Optik 4 genutzt werden, gegenüber welcher der optoelektronische Detektor 11 bewusst um einen definierten Abstand 38 gegenüber der Brennweite f angeordnet sein, also in definierter Weise im Backfokus (oder alternativ auch im Frontfokus).

In einem im Weiteren gezeigten Beispiel wird in vergleichbarer Weise mittels einem optischen Diffusor 3 im Strahlengang - welcher vor, in oder hinter der Bildebene angeordnet sein kann - eine gezielt dimensionierte, vorzugsweise in erster und zweiter Richtung unterschiedliche, Unschärfe explizit eingeführt, welche jene minimale Unschärfe übersteigt, welche mit der abbildenden Optik 4 eigentlich erzielbar wäre, speziell um ein Vielfaches der technisch erzielbaren minimalen Unschärfe. Damit kann auch bei der Auslegung der abbildenden Optik 4 die Anforderung an die abbildende Optik 4, weg von einer möglichst scharfen Abbildung und eher hin zu einer korrekten Ortsabbildung verschoben werden. In einer anderen Ausführungsform kann die genaue Ortsabbildung auch mit einer entsprechenden Orts-Kalibration der Empfangseinheit, insbesondere einer rechnerischen Kalibration der Auswertung des Detektors 11 erfolgen. Zusätzliche oder alternativ kann dabei vor dem Detektor 11 oder vor dessen Pixel la,lb,lc,ld,le,lf ein - in dieser Figur exemplarisch vor einem der Pixel angedeuteter - optischer Strahlaufweiter oder Diffusor 3 angebracht werden, welcher eine unscharfe Verteilung des von der abbildenden Optik 4 her auftreffenden Lichts auf eine größere Fläche als dessen Auftreffpunkt bewirkt. In einer Ausführungsform kann dabei das optische System 39 vorzugsweise derart ausgebildet sein, dass diese Fläche des Lichtbündels in der ersten Richtung (in Fächer-Richtung) eine größere Ausdehnung aufweist als quer dazu. Der Detektor und das diesem zugeordnete optische System 39 sind also derart ausgebildet und angeordnet, dass erfindungsgemäß ein Bündelquerschnitt am Auftreffpunkt in der Detektorebene genutzt wird, welcher größer ist als ein minimaler Zerstreuungskreis, wie dieser klassischerweise bei abbildenden oder photographischen Systemen genutzt werden würde. In einer Ausführungsform kann dabei beispielsweise ein Zerstreuungskreis oder allgemeiner einen Strahlungsbündelquerschnitt gebildet werden, welcher insbesondere in die erste Richtung größer als eines der Pixel 1a,1b,1c,1d,1e,1f ist.

In einer Ausführungsform kann der optische Strahlaufweiter 3 mit einem Mikrolinsenarray ausgebildet sein. Dieses Mikrolinsenarray kann zum Beispiel mit vielen zylindrischen, typisch etwa 100um breiten, Linsenstäben ausgebildet sein, und derart angeordnet sein, dass dieses das vom Reflektorziel 10 eintreffende und vom Empfangsobjektiv 4 geformte Lichtbündel unmittelbar vor dem Array aus Pixeln 1 asymmetrisch aufweitet. Beispielsweise kann so der Lichtfleck in der Detektorebene auf eine Grösse von z.B. etwa 2.2 mm x 0.9 mm auf der Sensitivitätsfläche des Detektors 11 ausgedehnt werden, wobei die SPAD-Pixel 1 des Detektors 11 mit einer Größe von etwa 1 mm x 1 mm ohne Abstand in einer Linie angeordnet sind. Mit der erfindungsgemäßen unscharfen, aufgeweiteten Abbildung kann nicht nur eine Subpixel-Interpolation zur Steigerung der Auflösung bei der Auswertung des Detektors 11 durchgeführt werden, (mit welcher sich die technologiebedingt größeren Pixel 1 und das damit limitierte Auflösungsvermögen eines Detektors 11 von angemessener Baugröße zumindest teilweise kompensieren lässt). Mit der unscharfen, aufgeweiteten Abbildung kann erfindungsgemäß auch erreicht werden, dass alle Microcells eines SPAD-Pixels 1 zumindest im Wesentlichen homogen ausgeleuchtet werden - womit beispielsweise auch ein einbrechen der effektiv nutzbare Dynamik des SPAD-Pixel 1 durch Beleuchtung von nur einem Teil der verfügbaren Microcells verhindert oder zumindest verringert werden kann. Speziell kann dabei mit einer erfindungsgemäßen Ausführungsform mit einem optischen System mit einer asymmetrischen Strahlaufweitung in vorteilhafter Weise sowohl ein Verlust von empfangenem Licht vermieden werden, als auch eine Pixelinterpolation über mehr als ein einziges Pixel 1 ermöglicht werden.

Mit einer Schlitzblende 7 kann dabei das Gesichtsfeld des Detektors 11 weiter auf den gewünschten Empfangsfächer 20 limitiert werden. Beispielsweise kann in einer Ausführungsform mit Backfokus dabei eine, das Gesichtsfeld des Detektors 11 einschränkende Schlitzblende 7 im Strahlengang zwischen abbildender Optik 4 und Detektor 11 angeordnet sein, speziell z.B. etwa im Bereich der Brennweite f.

**Fig. 6** zeigt ein Beispiel einer erfindungsgemäßen Ausführungsform mit einer optischen Strahlaufweitung 3 mit Diffusorplatte, Hologramm oder mikrooptischen Linsenarray, etc., welche trotz der abbildendem Optik 4 eine unscharfe Abbildung des Objektraums bewirkt, sodass zurückreflektiertes Licht von einem Objekt 10 aus dem Objektraum derart aufgeweitet wird, dass dieses von mehr als einen einzigen Pixel 1 erfasst wird. Dabei kann, wie hier gezeigt ein durchgängiger Diffusor 3 für mehrere Pixel la,lb,lc,ld,le,lf,lg des Detektors 11, oder alternativ ein individueller Diffusor für jedes der Pixel la,lb,lc,ld,le,lf,lg angewandt werden. Speziell im Falle eines rein stochastisch streuenden Diffusors 3 für mehrere Pixel 1 kann dieser Diffusor 3 auch in der scharf abgebildeten Schärfeeben der Optik 4 angeordnet sein, indem die optischen Eigenschaften des Diffusors 3 die unscharfe Abbildung hin zum Detektor 11 bewirken. Damit ist eine Frontfokus- oder Backfokus-Anordnung nicht zwingend erforderlich, optional jedoch auch zusätzlich möglich - speziell, wenn der Diffusor 3 dazu genutzt wird das empfangene Licht homogener über die Sensitivitätsfläche eines Pixels 1 zu verteilen. Eine vorteilhafte Aufweitung bzw. Umformung des aus dem Objektraum rückreflektierten und abgebildeten Lichtbündels kann auch mittels speziell angepassten Hologrammen oder astigmatischen Mikrolinsenarrays erzielt werden, etwa mit einer entsprechenden, in den Strahlengang eingebrachte Lichtumformplatte. Um die Baulänge der Empfangseinheit klein zu halten, kann dabei die optische Lichtumformplatte in Frontfokus-Anordnung angeordnet werden.

Die Lichtumformung eines erfindungsgemäßen, optischen Systems kann in speziell derart ausgebildet sein, dass die Lichtbündel auf der Pixelebene eine länglich elliptische (wie in dieser Figur angedeutet) oder rechteckige Ausdehnung annehmen. Mittels derartigen Mikrooptischen Bauteilen kann bei entsprechender Auslegung die vom Zielobjekt rückreflektierte Strahlung optimal, also im wesentlichen Verlustfrei genutzt werden.

**Fig. 7** zeigt eine Skizze von zwei nebeneinanderliegenden Sendefächern 13a und 13b (resp. den jeweils zugehörigen Empfangsfächern), wobei deren Winkelabstand in der zweiten Richtung 42 der Anschaulichkeit halber unproportional breit dargestellt ist (siehe z.B. anderswo erwähnte, in der Praxis übliche Werte).

Die gezeigten Lichtfächer 13a und 13b weisen dabei Rückreflexe 9a,9b,9c,9d auf, welche vom ortsauflösenden Detektor der erfindungsgemäßen Zielsuchvorrichtung in einer unscharfen Abbildung erfasst werden, und von denen jeweils eine erste Lage in der ersten Richtung 41 wie beschreiben ermittelt wird, beispielsweise als Winkellage innerhalb des Fächers 13 in Bezug auf dessen optische Achse 43 - wie dieses z.B. auch mit der Segmentierung des Fächers 13b angedeutet ist. Mit dem Detektor ist des Weiteren eine Distanzmesseinrichtung verbunden, welche für die Rückreflexe 9a,9b,9c,9d anhand einer Laufzeitmessung zwischen Aussenden und Rückempfang des Lichts des Sendefächers 13, jeweils eine Distanz 43 zu dem bestimmt. Die zweite Lage in Richtung 42 eines Rückreflexes 9 ergibt sich mit der Zuordnung eines Rückreflexes 9 zu einem der Sendefächer 13a,13b bei der Bewegung der Aussenderichtung der Sendefächer 13. Beispielsweise ergeben sich dabei Kugelkoordinaten des Ortes bzw. Objekts, an welchem der Rückreflex 9 auftritt, etwa mit Polarwinkel (=erster Lage in 41), Azimutwinkel (=zweiter Lage in 42) und Radius (=Distanz in 43), welche aber auch in bekannter Weise auf andere Koordinatensysteme umgerechnet werden können, insbesondere auf ein Koordinatensystem des Vermessungsgeräts. Anhand dieser drei Koordinaten, lassen sich die Rückreflexe 9 im Allgemeinen gut unterscheiden, sodass eine Differenzierung unterschiedlicher Reflexionsobjekte (hier auch als Cluster bezeichnet) anhand dieser Lagen, insbesondere anhand der Distanzinformation (oder in anderen Worten des Zeitpunkts des Eintreffens des Rückreflexes 9) automatisch von einer Ortungseinheit durchführbar ist.

Neben diesem Ort kann optional auch eine geometrische Ausdehnung oder Größe des Rückreflexes 9 bestimmt werden, etwa, wenn der Rückreflex 9 in den drei Dimensionen geometrisch zusammenhängend (als Cluster) über mehrere Sendefächer 13 oder über mehrere Pixel des Detektors auftreten, kann daraus eine Größe und/oder Form des reflektierenden Objekts bestimmt werden. Aus einer gemessenen scheinbaren Höhe in der ersten Richtung und einer entsprechenden scheinbaren Breite in der zweiten Richtung eines Reflexes 9 oder Clusters kann mit Zuhilfenahme der Messdistanz 43 eine wahre Ausdehnung des reflektierenden Objekts bestimmt werden.

Neben diesen geometrischen Betrachtungen kann zusätzlich auch eine Intensität des Rückreflexes 9 bestimmt werden, welche auch in Betrachtungen mit einbezogen werden kann. Dabei kann beispielsweise eine Lage des Orts des Rückreflexes 9 anhand eines Maximums, Schwerpunkts oder einer anderen Bewertungsfunktion der Intensität des Rückreflexes 9, in erster Lage, zweiter Lage und/oder Distanz ermittelt werden. Mit der Intensität des Rückreflexes 9, speziell in Kombination mit den anderen zuvor erwähnten Auswertungen kann auch wie bereits beschrieben ein Reflexionsgrad des reflektierenden Objekts 10 ermittelt werden, welcher ein weiteres Kriterium zur Differenzierung der Rückreflexe 9a,9b,9c,9d sowie im speziellen zur Klassifizierung des den Rückreflex 9 auslösenden Objekts 10 darstellen kann, speziell zur Unterscheidung eines Vermessungsreflektors 10 von einem Störreflex 9c,9d oder zur automatischen Auswahl eines bestimmten Reflektor-Typs. Der Reflexionsgrad ist hier mit unterschiedlich hellen Musterungen der Rückreflexe 9a,9b,9c,9d illustriert. Optional können bei der Klassifizierung der Objekte 10 zusätzlich auch die ermittelten Informationen bezüglich Ort und/oder Ausdehnung mitberücksichtigt werden.

Im gezeigten Beispiel lassen sich dabei die Rückreflexe 9a und 9b anhand Ihrer Lage in Distanz 43, erster Richtung 41, sowie deren Benachbarung in den Sendefächern 13a und 13b in der zweiten Richtung 42, als geometrisch zusammenhängend (=Cluster) - und somit von einem einzigen Reflexionsobjekt stammend - erkennen. Gemeinsam mit Ihrem hohen Reflexionsgrad (und/oder der geringen geometrischen Ausdehnung des Rückreflexes), handelt es dabei (zumindest mit sehr hoher Wahrscheinlichkeit) um einen Vermessungs-Trippleprisma 10. Diese Vermessungs-Trippleprisma 10 ist also in der dem Reflex 9a,9b zugeordneten Distanz 43, der für diesen Reflex 9a,9b und für diese Distanz anhand der Auswertung der unscharfen Abbildung von mehreren Pixeln des Detektors bestimmten ersten Richtung. In der zweiten Richtung 42 ist das Objekt 10 in Richtung des Sendefächers 13a aufzufinden, da im Sendefächer 13b das Empfangssignal für diesen Rückreflex bereits wieder schwächer wird und somit sein Maximum bereits überschritten hat. Alternativ könnte auch die zweite Richtung 42 zwischen den Sendefächern interpoliert werden, insbesondere bezüglich der bestimmten Intensität - speziell bei Nutzung von in der zweiten Richtung 42 verhältnismäßig schmalen Sendefächern ist derartiges aber vielfach nicht erforderlich um eine hinreichend genaue Lage in der zweiten Richtung als Übergabewert für einen nachfolgende Fein-Anzielung des Objekts 10 mit dem Vermessungsgerät zu bestimmen. Diese, von der Zielsucheinrichtung ermittelte, zumindest grobe Lage des Orts des Vermessungsreflektors 10 kann dann z.B. automatisch einer automatischen Anzieleinrichtung des Vermessungsgeräts übergeben werden, welche diesen dann automatisch (exakt) anzielt, vermisst und dessen geodätische Koordinaten bereitstellt.

In einer erfindungsgemäßen Ausführungsform kann dabei die Auswertung speziell auf Basis der Distanz 43, der Lage in der ersten Richtung 41 (=Vertikalwinkel) und der Intensität (bzw. des davon abgeleiteten Reflexionsgrads) des Rückreflexes erfolgen, insbesondere da all diese Informationen direkt aus den Ausgangssignalen der SPAD-Array-Pixeln 1 des erfindungsgemäßen ortsauflösenden Detektors 11 ermittelt werden. Damit kann eine schnelle und optional auch zumindest teilweise parallele Auswertung der Pixelsignale auf diese Informationen hin erfolgen, sowie speziell auch deren Kombination zur Erkennung, Differenzierung und Klassierung von Zielen durchgeführt werden - vorzugsweise online, also just-in-time für jeden der Fächer direkt beim Empfang der Rückreflex-Signale. Es kann also sozusagen eine primäre Auswertung in einem Distanz(=Zeit)-, Vertikalwinkel-, Intensitäts- Raum- oder Diagramm erfolgen. Der Horizontalwinkel der zweiten Richtung 42 kann dann erst nach Abschluss der obigen Auswertung mit einbezogen werden, wobei die zweite Richtung 42 auch vom Vermessungsgerät geliefert werden kann.

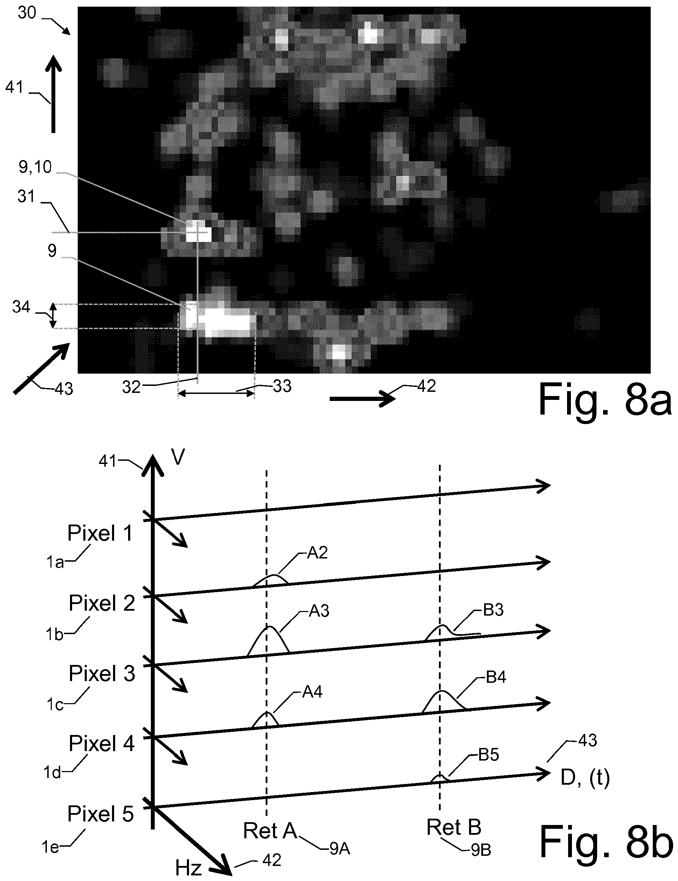

In **Fig. 8a** ist - im Rahmen der hier beschränkten Möglichkeiten einer zweidimensionalen Schwarz-Weiß Darstellung - ein Beispiel einer erfindungsgemäßen Erfassung und Auswertung bei der Zielsuche dargestellt. Dabei ist der abgesuchte Raumbereich sozusagen als ein Panorama-Bild 30 dargestellt. Dabei ist im Bild 30 in vertikaler Richtung die Auflösung des Raumbereichs 22 durch die beschriebene Auswertung der Längsrichtung des Detektors 11 in der ersten Richtung 41, und im Bild 30 in horizontaler Richtung die Auflösung des Raumbereichs 22 durch die nebeneinanderliegenden Sendefächer 13a,13b,... in der zweiten Richtung 42 dargestellt. Bei einer nicht orthogonalen oder nicht horizontierten Ausführungsform könnte die Erfassung allenfalls auch auf die gezeigte Darstellung umgerechnet werden. Dabei tritt augenscheinlich die relativ geringe Auflösung in Form der deutlich erkennbaren, einzelnen (in diesem Beispiel, aber im allgemeinen nicht zwingend quadratisch erscheinende) Rasterung des Bilds 30 hervor. Diese geringe Auflösung mag auf den ersten Blick unvorteilhaft und ungenau erscheinen, ermöglicht aber unter anderem ein schnelleres Abscannen des Raumbereichs 22 als dies bei höheren Auflösungen der Fall wäre. Die Rasterungen stellen hier die Empfangsintensität in ihrer Helligkeit dar, wobei hellere Bereiche stärkere Rückreflexe darstellen und schwarze Bereiche keine Rückreflexe. Dabei ist vorzugsweise jedoch zudem die jeweils zu dem Rückreflex 9 zugehörige, von der Distanzmesseinheit ermittelte Distanz 43 zu berücksichtigen, da beispielsweise auch von einem sehr hellen Reflektor 9 bei großen Distanzen 43 nur ein vergleichsweise schwacher Rückreflex empfangen wird. Derartiges kann zum Beispiel mit einer Auswertung einer distanznormierten Helligkeit des Reflektors 10 erfolgen, oder anders ausgedrückt mit einer Auswertung eines reflektorspezischen Reflexionsvermögens im 3D-Raum. Die vereinfache 2D-Darstellung kann hier nur beispielhaft bzw. als bereits distanznormierte 2D-Darstellung des Reflexionsvermögens oder Reflexionsgrads angesehen werden. Raumbereiche aus denen Rückreflexe empfangen wurden, zeigen sich also in Form von hell dargestellten Bildbereichen oder Clustern 9. Ein derartiges Cluster 9 kann etwa als räumlich (also nicht nur in den gezeigten zwei Dimensionen 41,42, sondern zusätzlich auch in der Distanz 43) zusammenhängender Bereich definiert werden, in welchem eine empfangene Rückreflex-Intensität bzw. ein in dieser Richtung ermittelter Reflexionsgrad über einem statischen oder dynamisch angepassten Schwellwert liegt.

Erfindungsgemäß wird mit der Distanzmesseinheit zu jedem hell gezeigten Rückreflex 9-Bereich eine - oder bei einem Mehrzielfall gegebenenfalls auch mehrere - Distanzen ermittelt, womit die gezeigte Darstellung 30 eigentlich auch eine räumliche Tiefe hätte, welche sich hier aber nicht sinnvoll darstellen lässt. Die hellen Bereiche wären dabei also auch in die Blattebene hinein gestaffelt. Damit könnten z.B. auch ein hier nur als einzelner Cluster 9 ersichtlicher Bereich sich in der Distanz 43 zu mehreren tiefengestaffelten räumlichen Clustern ergeben, welche jeweils für sich als eigenständige Cluster zu betrachten sind. Beispielsweise bei einer reflektierenden Glasscheibe in Hintergrund eines Messreflektors oder dergleichen.

Des Weiteren können auf Basis der gemessenen Ausdehnung 33 und/oder 34 eines Rückreflex 9 in einem oder über mehrere Sendefächer hinweg, sowie unter Einbezug der jeweils zugehörigen Distanz 43 ein wahre Breite 33 und/oder Höhe 34 der Zielreflektoren 10 ermittelt werden. Beispielsweise kann anhand der hierbei bekannten geometrischen Beziehungen eine Breite und/oder Höhe (bzw. eine geometrische Ausdehnung des Zielreflektors in allgemeiner Lage) auch in konkreten Maßeinheiten berechnet oder zumindest abgeschätzt werden. Eine derartige Breite und/oder Höhe sind vielfach charakteristische Merkmale der aufzufindenden Zielobjekte und stellen relevante Messgrössen bei der Zielmarkenerkennung dar.

Bei der Datenauswertung wird vorzugsweise die Tiefenstaffelung der Reflektoren 10 und der Störreflexe 9 berücksichtigt. Die Distanzmesseinheit, speziell, wenn diese als Waveform-Digizer (WFD) ausgebildet ist, stellt dabei gattungsgemäß bereits tiefengestaffelten Helligkeitswerte der Empfangssignale bereit, beispielsweise wird pro Pixel über einer Zeitachse (welche entsprechend der Signallaufzeit einer Distanzachse entspricht) ein Helligkeitswert in Form einer Signalamplitude erfasst und bereitgestellt. Haben Helligkeitswerte von benachbarten Pixeln dabei gleiche zugeordnete Distanz 43 (haben also äquivalente Lagen auf der Zeitachse), so kann deren Lage in der ersten Richtung 41 (und/oder in der zweiten Richtung 42) zwischen den Pixeln interpoliert werden, und damit eine Empfangsrichtung (oder Lage) des Rückreflexes 9 in der ersten Richtung 41 ermittelt. Bei abweichenden Distanzen 43 ist davon auszugehen, dass die Reflexionen 9 von unterschiedlichen Objekten herrühren, sodass eine Interpolation in erster Richtung 41 und/oder zweiter Richtung 42 nicht zielführend ist.

Des Weiteren kann auf Basis der empfangenen Rückreflex-Intensitäten zu den Zielreflektoren 10 oder spiegelnden Objekten jeweils ein zugehöriger Reflexionsgrad ermittelt werden, speziell unter Berücksichtigung der jeweils zugehörigen Distanz. Anhand dieser Daten kann nun die Auswerteeinheit Reflexionsziele identifizieren und/oder klassifizieren, speziell können dabei spiegelnde Fremdobjekten robust von Vermessungszielen unterschieden werden, speziell unter Berücksichtigung von jeweils charakteristischen Reflexionsgraden. Zu den aufgefundenen Reflektoren sind dabei unter Berücksichtigung der Intensitäts- oder Helligkeitsverteilung auch die Lage und somit die Richtungen zu den Reflektoren bestimmbar. All diese Berechnungen können dabei von der Auswerteeinheit 27 vorzugsweise in Echtzeit während des Abscannens des Suchraums, berechnet werden.

In einer Ausführungsform kann dabei auch auf eine gegenständliche und vollständige Berechnung eines - wie in Fig. 8a zur Illustration einer Ausführungsvariante der Auswertung gezeigten - 2D oder 3D Intensitätsbilds bei der Zielerkennung verzichtet werden. Es kann also eine Ausführungsform mit einer, im Wesentlichen online während der Erfassung erfolgenden Auswertung ausgebildet werden. Ähnlich wie auch im Zusammenhang mit Fig. 8b erläutert, können beispielsweise für jeden der emittierten Sendefächer 13, mehreren der Zeitachsen (resp. Distanzachsen), welche jeweils mit einer, einem der Pixel 1 zugeordneten Distanzmesseinheit für diesen Sendefächer 13 generiert wird, verarbeitet und analysiert werden. Dieses Analysieren und Berechnen ist dabei derart ausgebildet, dass ein oder mehrere Signale von Rückreflexen 9A,9B auf der Zeitachse aufgefundenen werden. Dieses kann laufend und von Laseremission zu Laseremission erfolgen, wobei entsprechende Signale verglichen werden. Speziell kann dabei die erwartete Signalstärke und gleichzeitig die Zielobjektbreite geprüft werden. Dabei können Signalparameter der empfangenen Signale mit einem (von mehreren) konfigurierten Reflektormodellen auf Übereinstimmung verglichen werden, um ein Zielobjekt 10 zu finden. Dabei können sich durchaus mehrere Zielobjekte entlang der Distanz/Zeitachse 43 befinden welche aufgrund der unterschiedlichen Distanzinformation und/oder Reflektivität erfindungsgemäß differenzierbar sind, beispielsweise ein Reflektor vor einer Verkehrstafel, etc. Anhand der Mehrzahl von Detektor-Pixeln 1 können dabei die Ziele auch in vertikaler Richtung, entlang der Fächerrichtung lokalisiert werden, und im Fall von mehreren Zielen bei der Auswertung auch räumlich getrennt werden.

In anderen Worten wird sozusagen der 3D-Raum sukzessive fächerartig, inklusive Tiefenerfassung nach Reflektoren abgescannt, währenddessen laufend rechnerisch analysiert und aufgefundene Zielobjekte 10 werden klassifiziert und gespeichert. Optional kann ein Benutzer dabei festlegen, welche Zielklassen oder Zieltypen aufgefunden, gespeichert oder angefahren werden sollen. Die erfolgte Auswertung kann dann optional auch für einen Benutzer visualisiert werden, beispielsweise können die gefundenen Zielobjekte als Overlay in ein Kamerabild eingeblendet oder die Reflektorziele auf einem Tablet-PC in einem Bauplan, einer Karte, oder einem CAD-Model zwecks Visualisierung eingezeichnet werden. In einer Ausführungsform kann ein derartiges 2D Intensitätsbild, oder vorzugsweise ein 3D Intensitätsbild auch einem lokalen oder entfernten Benutzer zur Visualisierung einer Stationsübersicht und/oder zur Interaktion mit einer Zielwahleinheit bereitgestellt werden, beispielsweise auf einem Bildschirm, optional aber auch über eine Augmented Reality (AR) oder Virtual Reality (VR) Anzeigeeinheit.

Erfindungsgemäß erfolgt dabei die Bestimmung einer Position oder Lage 31 oder Lage eines Reflexes 9 im Raumbereich nicht nur mit einer Auswertung eines einzelnen Pixels 1, sondern es wird die Empfangsintensität der in erster und/oder zweiten Richtung danebenliegenden Pixel 1 mitbetrachtet. Beispielsweise kann ein Intensitäts-Schwerpunkt oder Mittelpunkt eines Rückreflexes 9, also eines räumlich zusammenhängenden Clusters 9 von mehreren Pixeln 1, als Position 31 des Rückreflexes bestimmt werden, womit die dabei ermittelte Position 31 eine Auflösung aufweist, welche grösser ist als die Pixel-Auflösung des erfassten Bildes 30. Somit kann, mit entsprechender ingenieursmäßiger Auslegung der Parameter eines erfindungsgemäßen Zielerkennungssystems, die Position 31 eines Zielreflektors 10 im Raumbereich mit hinreichender Genauigkeit erfolgen, dass dieser Reflektor für eine darauffolgende Vermessung durch das Vermessungsgerät automatisch angezielt werden kann.

Spezielle Ausführungsformen der Erfindung können dabei auch zusätzliche Funktionalitäten für eine verbesserte Erkennung von Zielreflektoren 10 und deren Unterscheidung von Störreflexen 9 bereitstellen. Neben den Sensitivitätsvorteilen der erfindungsgemäß genutzten, jeweils als SPAD-Array ausgebildeten Pixeln 1 (z.B. bezüglich Sensitivität, übersteuerungsverhalten, Zeitmesseigenschaften, etc.), kann die erfindungsgemäße Rückreflex-Erfassung - wie deren hier gezeigten Illustration ersichtlich, auch eine zweidimensionale Ausdehnung 33,34 des Rückreflexes 9 (bzw. wie hier leider nicht darstellbar, allenfalls auch eine dreidimensionale Ausdehnung des Rückreflexes 9 unter Berücksichtigung der Distanz 43), bestimmt werden. Damit können Rückschlüsse auf eine wahrscheinliche Art oder Klasse von Reflexquellen berechnet werden, beispielsweise mit einem Vergleich des Clusters 9,10 mit einer Modellierung eines zu erwartenden Reflexes eines bekannten Zielreflektors in der entsprechenden Distanz des Clusters 9,10, oder mit einem entsprechen trainierten Künstliche-Intelligenz-System, Neuronalen Netzwerk, regelbasierter Klassifizierung oder einer Mischform dieser. So kann beispielsweise ein länglicher Reflex 9 eines Reflektor-Streifens auf einem Schild oder eine großflächig aber schwach reflektierende Glasscheibe 35 von eine punktförmig und mit hoher Intensität reflektierenden Tripple-Prisma 10 unterschieden werden.

Eine Klassifizierung ist dabei Beispielsweise anhand eines, durch die erfindungsgemäße Vorrichtung bestimmten Reflexionsgrads des den Rückreflex 9 auslösenden Objekts mit jenen, welche von den in der Vermessung eingesetzten Zielobjekten 10 bekannt sind. Tripple-Prismen im Vermessungswesen haben beispielsweise - normiert auf eine streuende weiße Oberfläche - einen Reflexionsgrad von ca. 1 Mio, flächige Retroreflektoren aus Kunststoff (Katzenaugen) haben einen Reflexionsgrad von ca. 30000, Reflexfolien von ca. 1000, etc. Die Abstufungen dieser Reflexionsvermögen obiger Beispiele umfassen dabei also mindestens in etwa eine Größenordnung oder mehr, womit diese mit den erfindungsgemäß eingesetzten SPAD-Arrays erfassbar, ausreichend genau auflösbar und auch unterscheidbar sind. Anhand der somit ermittelten Reflexionsgrade kann daher eine zuverlässige Klassifizierung der in der Vermessung und im Bauwesen gebräuchlich verwendeten Reflexmarkierungen und Reflexzielen durchgeführt werden.

Im gezeigten Beispiel von Fig. 8a sind, neben diversen Störreflexen unter anderem etwa ein Vermessungsreflektor 10 auf einer Vermessungslatte und die Warnweste 9 des die Vermessungslatte haltenden Arbeiters zu erkennen.

Für eine Erkennung von Trippelprismen kann dabei in einer Ausführungsform speziell auch eine, an die Dimension der verwendeten Trippelprisma angepasste, Parallaxe zwischen Sender- und Empfangsfächer in der Zielsucheinheit genutzt werden. So wird das Signal von Zielen, deren Rückreflex mit einem Parallelversatz in den Empfänger eintrifft - welcher Parallelversatz im Wesentlichen mit der bei diesen Trippelprismen üblichen Parallaxe übereinstimmt - gegenüber anderen, gewöhnlich ohne Parallaxe refektiereneden Zielen - überhöht. Bei entsprechende ausgebildeten Ausführungsformen der Vorrichtungen mit derartigen Parallaxe zwischen Sendeachse und Empfangsachse können beispielsweise einfach spiegelnde Objekte erst ab ca. 20m die Sensor-Parallaxe überwinden und überhaupt ein Empfangssignal erzeugen. Retroreflektoren mit Strahlversatz hingegen überwinden die Parallaxe bei allen Distanzen. Speziell zusammen mit den deutlich höheren Reflexionsgraden von Trippelprismen im Gegensatz zu Störreflexen und/oder deren spezifischer Punktform im Gegensatz zu oft größerflächigen Störreflexen kann auch damit die Auswerteeinheit eine robuste, automatische spezifische Erkennung von Vermessungsreflektoren durchführen in deren zugehörige erste und zweite Richtung, sowie deren Distanz ermitteln.

Bei mehrfach wiederholten Scans des Raumbereichs kann zusätzlich auch ein mechanisches Dittering, z.B. in Form eines geometrischen Versatzes der ausgesendeten Fächer in der zweiten Richtung in eine Lage zwischen zwei der beim vorherigen durchlauf ausgesendeten Fächer und/oder ein Versatz der Erfassungsbereiche der Pixel gegenüber dem vorherigen Durchlauf in erster Richtung erfolgen - womit sich die erzielbare Auflösung weiter verbessern lässt. Dazu können beispielsweise die Bewegungsachsen des Vermessungsgeräts bzw. die Sendezeitpunkte der Lichtfächer entsprechend angesteuert werden. Beispielsweise kann derartiges unter anderem nach einem ersten Grob-Scan des gesamten Raumbereichs auf einen potentiell interessierenden Teilbereich des gesamten Raumbereichs erfolgen.

Bei modernen geodätische Vermessungsgeräten, wie Totalstationen, Theodolite, Tachymeter oder Lasertracker kann die Bewegung in der zweiten Richtung 42 meist mit recht hoher Geschwindigkeit erfolgen, beispielsweise etwa eine Verschwenkung um die Stehachse mit bis zu 120 Grad/Sekunde. Eine erfindungsgemäße Zielsuchvorrichtung muss somit beim Aussenden des Sendefächers eine entsprechen hohe Laserschussrate und empfangsseitig auch eine entsprechend hohe Messrate aufweisen, um diese Geschwindigkeiten auch nutzen zu können und dabei mit dem Lichtfächer die zweite Richtung lückenlos - oder auch mehrfach überlappend - nach Vermessungszielen abscannen zu können. Beispielsweise unterteilt eine angenommene Messrate von 75kHz einen horizontalen Suchbereich von 360Grad in Sektoren der Breite 0.0016Grad. Mit einer hier angenommenen, typischen Breiten des Laserfächers in der zweiten Richtung von 0.013Grad kann somit jeder Reflexpunkt 9 in etwa 8-fach angemessen werden. In einer Ausführungsform der Erfindung sind derartige, oder noch höhere Scan-Geschwindigkeiten und Auswertungen mit heutigen Auswertemitteln durchaus in Echtzeit verarbeitbar. Um - speziell z.B. bei batteriebetriebenen Instrumenten - jedoch elektrische Leistung und Strom zu sparen und/oder exzessive Wärmeentwicklung der elektronischen Recheneinheit zu vermeiden, kann wahlweise oder alternativ auf die vorgängig beschriebene Methode des mechanischen Ditterings mit sich wiederholenden Scans zurückgegriffen werden, mit einer zu einer Umdrehung aperiodischen Messrate gearbeitet werden, oder erst ein Grob-Scan mit einer geringeren Messrate (z.B. für eine ca. 1-fache Abdeckung des Scangebiets) gefolgt von einer - insbesondere nur auf dabei erkannte, potentielle Zielreflektoren fokussierten - Messung mit höherer Messrate erfolgen.

In **Fig. 8b** ist ein Diagramm mit beispielhaften Empfangssignalen einer erfindungsgemäßen Zielreflektor-Suchvorrichtung 14s gezeigt. Darin sind mehrere, hier beispielhaft fünf, SPAD-Array-Pixel 1a-e der Linienanordnung des ortsaufösenden Detektors 11 aufgetragen, welche hier in einer Vertikalrichtung V (als erster Richtung 41, in welcher der Sendefächer 13 ausgerichtet ist) im Bildbereich der abbildenden Optik 4 angeordnet sind. Jedem dieser Pixel 1a-e ist dabei eine Zeitachse 43 D,(t) zugeordnet, entlang welcher für jedes der Pixel 1a-e jeweils die empfangene Lichtintensität von allfälligen Rückreflexen 10 eines in dieser Hz-Richtung 42 ausgesendeten Sendefächerlichtpulses aufgetragen ist. Dabei ist die Zeitachse D, (t) 43 entsprechend der auf ihr abgetragenen Signallaufzeit des Lichtpulses zugleich auch als eine Distanzachse als Maß einer, zur Laufzeit proportionalen Entfernung zum Ort des Rückreflexes 10 anzusehen. Die zweite Richtung 42 ist dabei als Horizontalachse mit Hz angedeutet, in welcher der Sendefächer 13 zwischen den Lichtpulsen der einzelnen Sendelichtfächer bewegt wird. Mit jedem Laserpuls entsteht dabei unter neuem Hz-Winkel 42 ein Diagramm wie gezeigt, mit den Dimensionen Distanz D 43 & V-Winkel 41. Der Übersichtlichkeit halber wird hier aber nur ein Diagramm für einen der Sendefächer 13 dieser Sendefächerschaar in der Hz-Richtung 42 dargestellt. Dabei ist die Zeitachse D, (t) 43 entsprechend der auf Ihr abgetragenen Signallaufzeit des Lichtpulses zugleich auch als eine Distanzachse anzusehen, auf welcher ein Maß einer, zur Laufzeit proportionalen Entfernung zu einem Ort des Rückreflexes 9 abgetragen ist. Die gezeigten Kurven der Rückreflexe 9a und 9b auf den Zeitachsen D, (t) 43 der einzelnen Pixel 1a-e können dabei mit einem Analog-Digital-Wandler am Ausgangssignal des jeweiligen Pixels 1 als Wellenform der Empfangsintensität über der Zeit erfasst werden.

Dabei ist zu sehen, dass sich, entsprechend der erfindungsgemäßen unscharfen Abbildung, erfindungsgemäß die Erfassungsbereiche der einzelnen Pixel 1a-e im Objektraum teilweise überlappen, sodass ein Rückreflex 9a,9b von einem Ort im Objektraum (zumindest anteilig) von mehr als einem der Pixel 1a-1e empfangen wird. Im gezeigten Beispiel treten zwei Rückreflexe 9a und 9b auf, welche hier - da sie zu demselben Sendefächer 13 gehören - dieselbe Lage Hz in der zweiten Richtung 42 aufweisen, aber sowohl eine unterschiedliche Vertikallage V in der ersten Richtung 41 als auch eine unterschiedliche Distanz D 43 aufweisen.

Dabei kann in einer Ausführungsform der Auswertung davon ausgegangen werden, dass Intensitätspulse A,B bei unterschiedlichen Pixeln 1a-e, welche eine (zumindest im Wesentlichen) selbe Lage auf der Zeitachse D,(t) 43 aufweisen, von derselben Reflexionsquelle 10 stammen. Damit kann in gezeigtem Beispiel eine zusammenschauende Auswertung der Pulse A2,A3,A4 erfolgen, wobei eine Lage der Reflexionsquelle in V-Richtung 41 anhand einer Verteilung der Intensitäten (also z.B. der Höhe der Pulse) der zu diesem Zeitpunkt auftretenden Pulse A2,A3,A4 an den Pixeln 2,3,4 ermittelbar ist. Damit wird die V-Lage 41 der Reflexionsquelle des Reflexes 9A mit einer Auflösung ermittelt, welche auch zwischen den Pixeln 1a-e (bzw. deren zugeordneten optischen Achsen) liegen kann, womit nicht lediglich eine Zuordnung der Lage der Reflexionsquelle zu einem einzigen der Pixel erfolgt, sondern eine Auflösung der Lage der Rückreflexquelle in Richtung V 41 erzielbar ist, welche die Anzahl der Pixel 1a-e übersteigt.

Im gezeigten Beispiel tritt desweiteren eine zweite Reflexion 9B in einer zu obengenannter Distanz RetA unterschiedlichen Distanz RetB auf. Diese wird erfindungsgemäß ebenfalls von mehreren der Pixel 1a-e erfasst, wobei deren Auswertung nicht nur eine andere Distanz D 43, sondern auch eine andere Lage in Richtung V 41 ergibt - in diesem Fall zwischen den Pixeln 1c,1d und 1e, speziell eine V-Lage zwischen den Pixeln 1c-1e welche sich ca. bei einem Viertel des Abstands zwischen der Richtung von Pixel 1d in Richtung Pixel 1c befindet. Diese Auswertung wurde oben bereits erläutert.

Bezüglich der Lage Hz in der zweiten Richtung 42 sei hierbei angemerkt, dass diese in Ihrer endgültigen Auswertung für die gezeigten Rückreflexe RetA,RetB nicht zwingend gleich sein muss, sondern, dass die gezeigten Pulse A2,A3,A4 B3,B4,B5 allenfalls auch über mehrere Hz-Diagramme von mehreren Sendefächern 13 hinweg in der zweiten Richtung 42 verteilt sein können, und die endgültige Lage des Rückreflexes in der zweiten Richtung 42 wie bereits erläutert anhand eines Schwerpunkts, Spitzenwerts oder ähnlichem der empfangenen Intensität über mehrere Sendefächer hinweg ermittelt wird - Sodass auch in Richtung Hz 42 allenfalls eine Zwischenposition zwischen zwei Sendefächern 13 ermittelt werden kann.

In einer Ausführungsform kann das Diagramm in Fig. 8b auch als ein Seitenriss bzw. als ein Schnitt orthogonal zur Zeichenebene von Fig. 8a angesehen werden. Dabei entsprechen die V-Achse 41 und die Hz-Achse 42 den beiden Bildkoordinaten von Fig. 8b und die D, (t)-Achse 43 verläuft orthogonal zur Blattebene. Die Höhen der Wellenformen A2,A3,A4 und B3,B4,B5 der Rückreflexe 9a,9B aus Fig. 8b werden dabei durch entsprechende Helligkeiten der Bildpunkte in Fig. 8a dargestellt (wobei in den hier dargestellten Ausführungsformen die Anzahl der Pixel 1 des Detektors 11 in den unterschiedlichen Beispielen von Fig. 8a und Fig. 8b nicht gleich ist).

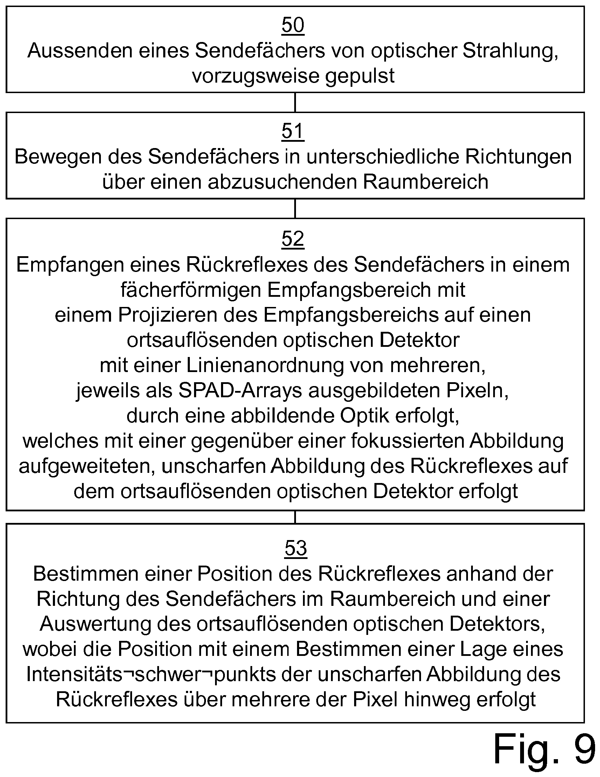

**Fig. 9** zeigt ein Blockdiagramm einer Ausführungsform eines erfindungsgemäßen Verfahrens oder einer erfindungsgemäßen Methode, speziell zur automatischen Ausführung bei einer Anzielung von Zielobjekten ausgebildet ist, wie beispielsweise bei einem geodätischen Vermessungsgerät.

In Block 50 erfolgt ein Aussenden eines Sendefächers von optischer Strahlung, vorzugsweise in Form einer zeitlich modulierten, insbesondere gepulsten, Projektion einer Laserline.

In Block 51 erfolgt ein Bewegen des Sendefächers in unterschiedliche Richtungen über einen abzusuchenden Raumbereich, insbesondere ein drehen des Sendefächers um eine Achse, sodass der Raumbereich von einem somit entstehenden Fächerbündel abgedeckt ist.

In Block 52 erfolgt ein Empfangen eines Rückreflexes eines der Sendefächer in einem fächerförmigen Empfangsbereich. Mit einer abbildenden Optik erfolgt dabei ein Projizieren des Empfangsbereichs auf einen ortsauflösenden optischen Detektor, welcher mit einer Linienanordnung von mehreren, jeweils als SPAD-Arrays ausgebildeten Pixeln ausgebildet ist. Das Projizieren erfolgt dabei mit einem optischen System, welches derart ausgebildet ist, dass eine, gegenüber einer fokussierten Abbildung aufgeweitete, unscharfe Abbildung des Objektraums auf dem ortsauflösenden optischen Detektor erfolgt - speziell wobei der Rückreflex von Licht des Sendefächers an reflektierenden Objekten im Objektraum von mehr als nur einem der Pixel erfasst wird.

In Block 53 erfolgt ein Bestimmen einer Distanz, einer Signalstärke und einer Position des Rückreflexes anhand der Richtung des Sendefächers im Raumbereich mit einem Auswerten des ortsauflösenden optischen Detektors, wobei die Position mit einem Bestimmen einer Lage eines Intensitätsschwerpunkts der unscharfen Abbildung des Rückreflexes auf dem Detektor über mehrere der Pixel hinweg erfolgt. Dabei kann speziell eine Laufzeit-Distanzmesseinheit zur Bestimmung der einer Distanz für jeden der Rückreflexe, vorzugsweise jeweils individuell für jedes der Pixel, ausgebildet sein. Die Richtung des Sendefächers im Raumbereich kann mit einem Winkelencoder als zweite Richtung erfasst werden. Insbesondere kann auf Basis der Signalstärke und der Distanz dabei ein Reflexionsgrad der Quelle des Rückreflexes bestimmt werden.

Die obigen Schritte können dabei speziell kontinuierlich oder quasi-kontinuierlich, allenfalls auch zumindest teilweise parallel erfolgen - insbesondere für jeden der Sendefächer.

In einem weiteren Schritt können die ermittelten Werte an das Vermessungsgerät weitergegeben werden - speziell eine - in geodätischen Maßstab grobe - Lage des Objekts, welches den Rückreflex auslöst in der ersten Richtung, der zweiten Richtung sowie der Distanz. Vorzugsweise kann dabei ein Erkennen, Klassifizieren und oder Filtern der Objekte erfolgen, beispielsweise anhand deren Reflexionsgrad, geometrischer Abmessung, etc. Insbesondere kann anhand dieser ermittelten Position des Zielobjekts das Vermessungsgerät mit einer hochpräzisen automatischen Zielerfassungsvorrichtung diese Position anfahren und infolge die Koordinaten des Zielobjekts mit geodätischer Genauigkeit, also insbesondere Winkelsekundengenau und Millimetergenau, automatisch ermitteln und als Vermessungsergebnis bereitstellen.

In einem Beispiel einer Ausführungsform einer Anwendung der vorliegenden Erfindung kann beispielsweise die Zielsucheinheit (in geodätischem Maßstab) Grobkoordinaten zu den gesuchten Zielobjekten ermitteln, z.B. eine Grob-Richtung in erster und zweiter Richtung, etwa als zwei Winkel Hz und V im Koordinatensystem des Vermessungsgeräts. Dieses erfolgt mittels einer Distanzmesseinheit, welche ausgebildet ist um transienten Signale der Sendeeinheit zu empfangen und zumindest eine Amplitude (Intensität) und eine Laufzeit für einen Rückreflex von einem Ziel zu ermitteln. Die Amplitude kann dabei in ein Reflexionsvermögen, als eine Ziel-Eigenschaft, umgerechnet werden und beispielsweise mit einem, für ein gesuchtes Reflektorziel vorkonfigurierten Schwellwert verglichen werden.

Auf der Distanz- bzw. Zeit-Achse für eines der Pixel können dabei durchaus auch mehr als ein Rückreflex auftreten, welche aber mit einer Distanzmesseinheit der Zielsuchvorrichtung, welche zumindest auf ca. 1 bis 5cm genau misst, im Empfangssignal gut separiert und bei der Auswertung anhand Ihrer Lage auf der Zeitachse entsprechend voneinander trennbar sind. In einer Ausführungsform können dabei beispielsweise die Amplituden der eintreffenden Rückreflexe laufend, also für jeden der in eine unterschiedliche zweite Richtung emittieren Sendfächer oder von Laseremission zu Laseremission, gemessen werden. Dabei kann in einer einfach ausgestalteten Ausführungsform beispielsweise eine Winkellage der Bewegung des Sendefächers in zweiter Richtung erfasst werden, bei welcher die Intensität eines Rückreflexes nach einem Anstieg wieder abnimmt - was nur ein Beispiel zur Ermittlung eines Maximums des Rückreflexes in der zweiten Richtung eines Verschwenkens des Sendefächers darstellt. Dabei kann als weiteres Kriterium zudem eine vorgegebene Anforderung an das, für diesen Rückreflex ermittelte Reflexionsvermögen als Bedingung für ein Erfassen dieses Rückreflexes als Ziel herangezogen werden. Bei einem derartigen erfassen eines Rückreflexes eines Ziels kann dann das Vermessungsinstrument diesen Winkel festzuhalten, also die Bewegung des Achsensystems in zweiter Richtung stoppen und die Zielachse des Vermessungsgeräts auf das somit gefundene Ziel auszurichten.

Mit den in der ersten Richtung, z.B. der vertikalen Richtung, erfindungsgemäß vorhandenen, mehreren Pixel des ortsauflösenden Linien-Detektors, insbesondere in Kombination mit mehreren, jeweils einem Pixel zugeordneten, parallel arbeitenden Distanzmesseinheiten, ist - wie beschreiben - auch eine, zumindest Grob aufgelöste, Ausrichtung in der ersten Richtung entlang des Sendefächers ermittelbar. Somit kann beispielsweise eine Winkelkoordinate des Rückreflexes in vertikaler Richtung ermittelt werden, beispielsweise aus einem eingestellten Winkel an dem, die Zielerfassungseinheit tragenden, ersten Achsensystem des Vermessungsinstruments und der von der Zielerfassungseinheit gemessenen Ablage, welche über die bestrahlten Pixel wie beschrieben ermittelt wird. Das Vermessungsgerät kann dann seine beiden Achsensysteme auf das somit gefundene Ziel, bzw. dessen Koordinaten in erster und zweiter Richtung grob ausrichten und dieses Ziel vermessen, beispielsweise indem die Kontrolle an eine automatische Zielausmessung (ATR) des Vermessungsgerät übergeben wird.

## Patentansprüche

1. Zielreflektor-Suchvorrichtung (14s), ausgebildet zum automatischen Auffinden von wenigstens einer reflektiven Zielmarke (10) mit einem geodätischen Vermessungsgerät (14), welche aufweist:
▪ eine Sendeeinheit (8), welche eine optische Strahlung in Form eines, entlang einer ersten Richtung (41) orientierten Sendefächers (13) emittiert,
▪ eine motorisierte Einrichtung (14m) zur Bewegung des Sendefächers (13) entlang einer zweiten Richtung (42) über einen Raumbereich (19) und zur Erfassung eines Werts der zweiten Richtung (42), vorzugsweise wobei die zweite Richtung (42) im Wesentlichen orthogonal zur ersten Richtung (41) orientiert ist,
▪ eine Empfangseinheit (40), welche mit einem optoelektronischen Detektor (11) zurückreflektierte Anteile der optischen Strahlung des Sendefächers (13) als zumindest einen Rückreflex (9), innerhalb eines fächerförmigen Erfassungsbereichs (20) empfängt, welcher Erfassungsbereich mit dem Sendefächer (13) mitbewegt wird, und
▪ eine Ortungseinheit (27), welche mit einer Auswertung der Empfangseinheit (40) und der zweiten Richtung (42) eine Lage der Zielmarke (10) bestimmt,
**dadurch gekennzeichnet, dass**
der optoelektronische Detektor (11) als ortsauflösender optoelektronischer Detektor (11) mit einer Linienanordnung von mehreren Pixeln (1) ausgebildet ist,
wobei die Pixel (1) als SPAD-Array-Erfassungseinheiten ausgebildet sind, welche pro Pixel (1) jeweils mit mehreren im Geiger-Modus betriebenen und zu einem gemeinsamen Ausgangssignal zusammengeschalteten Single Photon Avalanche Photodioden, SPADs, ausgebildet sind, und
die Empfangseinheit (40) ein optisches System (39) mit einer abbildenden fixfokus Optik (4) aufweist,
wobei das optische System (39) und der optoelektronische Detektor (11) derart angeordnet und ausgebildet sind,
dass von einem Punkt im Erfassungsbereichs (20) zurückgeworfene Anteile der optischen Strahlung auf der Sensitivitätsfläche des optoelektronische Detektors (11) derart aufgeweitet wird, dass eine unscharfe Abbildung erfolgt.

2. Zielreflektor-Suchvorrichtung (14s) nach Anspruch 1, **dadurch gekennzeichnet, dass** die Ortungseinheit (27) derart ausgebildet ist, dass diese mit einer Auswertung der Pixel-Ausgangssignale des Detektors (11) eine Lage des Rückreflex (9) in der ersten Richtung (41) und die Ortungseinheit (27) eine Distanzmesseinheit (23) aufweist, welche - insbesondere mit einer Laufzeitmessung - eine Distanz (43) zu einem, den Rückreflex (9) auslösenden Objekt ermittelt, insbesondere wobei die unscharfe Abbildung derart erfolgt, dass der zurückgeworfene Anteil der optischen Strahlung von einem Punkt aus dem fächerförmigen Empfangsbereich (20) von mehr als einem der Pixel (1) empfangen wird.

3. Zielreflektor-Suchvorrichtung (14s) nach zumindest einem der Ansprüche 1 oder 2, **dadurch gekennzeichnet, dass** die Auswertung der Ortungseinheit (27) derart ausgebildet ist, dass die Lage in der ersten Richtung (41) mit einer empfangsintensitätsabhängig ermittelten, interpolierten Auswertung der Ausgangssignale von mehreren Pixeln (1) erfolgt, welche interpolierte Auswertung Rückreflexe von jenen der Pixeln (1) zusammenfasst, welche eine im Wesentlichen gleiche Distanz (43) aufweisen, insbesondere wobei die interpolierte Auswertung mit einer Schwerpunktbildung basierend auf den Ausgangssignalen von mehreren der Pixeln (1) erfolgt.

4. Zielreflektor-Suchvorrichtung (14s) nach zumindest einem der Ansprüche 1 bis 3, **dadurch gekennzeichnet, dass** die Distanzmesseinheit (23) derart parallel ausgebildet ist, dass für jedes der Pixel (1), welches den Rückreflex (9) empfängt, zumindest eine Distanz (43) ermittelt wird.

5. Zielreflektor-Suchvorrichtung (14s) nach zumindest einem der Ansprüche 1 bis 4, **dadurch gekennzeichnet, dass** die Ortungseinheit (27) derart ausgebildet ist, dass die Auswertung in der zweiten Richtung (42) mit einer empfangsintensitätsabhängigen Schwerpunktbildung basierend auf den Ausgangssignalen der einzelnen Pixel (1) bei benachbarten/unterschiedlichen Werten der zweiten Richtung (42) erfolgt.

6. Zielreflektor-Suchvorrichtung (14s) nach zumindest einem der Ansprüche 1 bis 5, **dadurch gekennzeichnet, dass** die Ortungseinheit (27) derart ausgebildet ist, dass eine geometrische Ausdehnung in der ersten Richtung (41) als eine Höhe (34) und eine geometrische Ausdehnung in der zweiten Richtung (42) als eine Breite (33) eines jeweils räumlich zusammenhängenden Zielobjekts (10), welches den Rückreflex (9) auslöst, ermittelt wird.

7. Zielreflektor-Suchvorrichtung (14s) nach zumindest einem der Ansprüche 1 bis 6, **dadurch gekennzeichnet, dass** die Ortungseinheit (27) derart ausgebildet ist, dass die Lage in erster Richtung (41), die Distanz (43) und eine Intensität des Rückreflex (9) - optional zusammen mit der Lage in zweiter Richtung (42), der Höhe (34) und/oder der Breite (33) - als eine zumindest dreidimensionale, räumliche Intensitäts-Verteilung ermittelt wird.

8. Zielreflektor-Suchvorrichtung (14s) nach zumindest einem der Ansprüche 1 bis 7, **dadurch gekennzeichnet, dass** die Ortungseinheit (27) ein räumliches Profil von drei oder mehr, insbesondere von bis zu sieben, Dimensionen des Rückreflex (9) mit der Lage in erster Richtung (41), der Lage in zweiter Richtung (42), der Distanz (43), der Höhe (34), der Breite (33), der Intensität Rückreflex (9) und/oder eines Reflexionsgrads eines, den erfassten Rückreflex (9) auslösenden Zielobjekts (10) bestimmt, und
auf dessen Basis für jeden empfangenen Rückreflex (9) eine automatische Zielmarkenerkennung und/oder Zielmarkenidentifikation durch die Auswerteeinheit erfolgt.

9. Zielreflektor-Suchvorrichtung (14s) nach zumindest einem der Ansprüche 1 bis 8, **dadurch gekennzeichnet, dass** das optische System (39) mit einem gegenüber einer Fokusebene der Optik (4) um einen definierten Versatz nach hinten versetzten Detektor (11) ausgebildet ist, insbesondere dass die Pixel (1) des Detektors (11) gegenüber einem Fokus der Optik (4) defokussiert angeordnet sind,
insbesondere wobei die abbildende Optik (4) und die Pixel (1) derart ausgebildet und angeordnet sind, dass Licht von einem Punkt aus einem vor der abbildenden Optik (4) liegenden Objektraum eine Fläche auf den hinter der abbildenden Optik (4) liegenden Pixeln (1) beleuchtet, welche Fläche zumindest annähernd gleichgroß oder grösser als eine Sensitivitätsfläche eines der Pixel (1) ist.

10. Zielreflektor-Suchvorrichtung (14s) nach zumindest einem der Ansprüche 1 bis 9, **dadurch gekennzeichnet, dass** das optische System (39) eine auf den fächerförmigen Erfassungsbereich (20) bildfeldbegrenzenden Schlitzblende (7) zwischen der Optik (4) und dem Detektor (11) aufweist, und
die Optik (4) derart ausgebildet und angeordnet ist, dass
▪ eine Fokussierung eines Objektraums der Optik (4) in eine Ebene der Schlitzblende erfolgt, und
▪ die Pixel (1) defokussiert in einem definierten Abstand (38) hinter der Ebene der Schlitzblende (7) angeordnet sind,
insbesondere wobei
▪ der definierte Abstand (38) derart gewählt ist, dass ein Zerstreuungskreis der Defokussierung im Wesentlichen einer Breite der Pixel (1) orthogonal zur Linienanordnung der Pixel (1) entspricht, oder
▪ der definierte Abstand (38) derart gewählt ist, dass ein Zerstreuungskreis durch die Defokussierung im Wesentlichen gleich oder grösser einer Höhe eines der Pixel (1) entlang der Linienanordnung der Pixel (1) entspricht.

11. Zielreflektor-Suchvorrichtung (14s) nach zumindest einem der Ansprüche 1 bis 10, **dadurch gekennzeichnet, dass** das optische System (39) mit einem optischen Diffusor-, Hologramm- oder Mikrolinsen-Element (3) zwischen der abbildenden Optik (4) und dem Detektor (11) ausgebildet ist,
insbesondere wobei das optische System (39) mit einem Diffusor (3) vor jedem einzelnen oder vor allen der Pixel (1) ausgebildet ist, welcher derart ausgebildet ist, dass auf diesen einfallendes Licht (21) im Wesentlichen homogen über einen zusammenhängenden Sensitivitätsbereich des Pixels (1) verteilt wird.

12. Geodätisches Vermessungsgerät (14) mit
einer Zielreflektor-Suchvorrichtung (14s) nach zumindest einem der Ansprüche 1 bis 11, **dadurch gekennzeichnet, dass** das geodätische Vermessungsgerät (14) als Totalstation, Theodolit, Tachymeter, Laserscanner oder Rotationslaser ausgebildet ist, und
die Zielreflektor-Suchvorrichtung (14s) um eine, vorzugsweise zumindest im wesentlichen Vertikale, Drehachse (V) des geodätischen Vermessungsgeräts (14) als zweite Richtung (42) drehbar angeordnet ist, insbesondere wobei die Zielreflektor-Suchvorrichtung (14s) in einer Stütze (14b) des geodätischen Vermessungsgeräts (14) angeordnet ist.

13. Verfahren zur automatischen Auffindung einer Lage einer reflektiven Zielmarke (10) in einem Raumbereich (22), insbesondere mit einer Zielreflektor-Suchvorrichtung (14s) nach einem der Ansprüche 1 bis 11, insbesondere in einem geodätischen Vermessungsgerät (14) nach Anspruch 12, mit
▪ einem Aussenden von optischer Strahlung in Form eines, in einer ersten Richtung (41) orientierten Sendefächers (13),
▪ einem Bewegen des Sendefächers (13) über den Raumbereich (22) in einer zweiten Richtung (42),
▪ einem Empfangen von einem Rückreflex (9) eines Anteils der optischen Strahlung des Sendefächers (13) innerhalb eines fächerförmigen Empfangsbereichs (20),
▪ einem Auswerten eines fächerförmigen Empfangsbereichs (20) mit einem optischen Detektor (11), und
▪ einem Bestimmen der Lage des Rückreflex (9) anhand des Auswertens und einer zugehörigen Lage des Bewegens in der zweiten Richtung (42) erfolgt,
**dadurch gekennzeichnet, dass**
der optische Detektor (11) als ortsauflösender optischer Detektor (11) mit einer Linienanordnung mehrerer Pixel (1) ausgebildet ist, welche Pixel (1) jeweils als SPAD-Arrays ausgebildet sind, und
das Empfangen mit einem optischen System (39) mit einer abbildenden Optik (4) erfolgt, wobei das optische System (39) derart ausgebildet und angeordnet ist, das ein unscharfes, gegenüber einer fokussierten Abbildung aufgeweitetes, Abbilden des Rückreflex (9) aus dem Erfassungsbereich (22) auf dem ortsauflösenden optischen Detektor (11) erfolgt.

14. Verfahren nach Anspruch 13, **dadurch gekennzeichnet, dass** ein Bestimmen einer Lage in der ersten Richtung (41) mit einem Ermitteln eines IntensitätsSchwerpunkts des Rückreflex (9) auf dem ortsauflösenden optischen Detektor (11) über mehrere der Pixel (1) hinweg erfolgt, insbesondere mit einer interpolierten Positionsauflösung zwischen den Pixel (1).

15. Verfahren nach Anspruch 13 oder 14, **dadurch gekennzeichnet, dass** ein Erkennen von Zielmarken (10) mit einem Auswerten eines zumindest dreidimensionalen, räumlichen Intensitätsprofils von Rückreflexen (9) im Raumbereich (22) erfolgt, insbesondere in einer Lage eines Intensitätsschwerpunkts des Rückreflexes (9) in der ersten Richtung (41), einer Distanz (43) des Rückreflexes (9) und einer Intensität des Rückreflexes (9) erfolgt,
optional mit einer Auswertung einer geometrischen Ausdehnung des Rückreflexes (9),
speziell wobei eine automatisches Erkennung und/oder Klassifizierung der Zielmarke (10) anhand eines, aus der Intensität und der Distanz des Rückreflexes (9) ermittelten Reflexionsgrads der Zielmarke (10) erfolgt.

## Claims

1. Target reflector search device (14s), designed for automatically locating at least one reflective target mark (10) by a geodetic surveying device (14), which comprises:
▪ an emitting unit (8), which emits optical radiation in the form of an emission fan (13) oriented along a first direction (41),
▪ a motorized device (14m) for moving the emission fan (13) along a second direction (42) over a spatial region (19) and for acquiring a value of the second direction (42), preferably wherein the second direction (42) is oriented substantially orthogonally to the first direction (41),
▪ a receiving unit (40), which receives reflected portions of the optical radiation of the emission fan (13) with an optoelectronic detector (11) as at least one reflection (9) within a fan-shaped acquisition region (20), which acquisition region is moved along with the emission fan (13), and
▪ a locating unit (27), which determines a location of the target mark (10) with an analysis of the receiving unit (40) and the second direction (42),
**characterized in that**
the optoelectronic detector (11) is designed as a position-resolving optoelectronic detector (11) having a linear arrangement of multiple pixels (1), wherein the pixels (1) are formed as SPAD array acquisition units,
which are each formed having a plurality of single photon avalanche photodiodes, SPADs, operated in the Geiger mode and interconnected to form a common output signal, per pixel (1), and
the receiving unit (40) comprises an optical system (39) having an imaging fixed-focus optical unit (4),
wherein the optical system (39) and the optoelectronic detector (11) are arranged and configured in such a way that portions of the optical radiation reflected from a point in the acquisition region (20) are expanded on the sensitivity surface of the optoelectronic detector (11) in such a way that blurry imaging takes place.

2. Target reflector search device (14s) according to Claim 1, **characterized in that** the locating unit (27) is configured in such a way that it determines a location of the reflection (9) in the first direction (41) using an analysis of the pixel output signals of the detector (11), and the locating unit (27) comprises a distance measuring unit (23), which - in particular using a time-of-flight measurement - derives a distance (43) to an object causing the reflection (9), in particular wherein the blurry imaging is configured in such a way that the reflected portion of the optical radiation from one point from the fan-shaped reception region (20) is received by more than one of the pixels (1).

3. Target reflector search device (14s) according to at least one of Claims 1 or 2, **characterized in that** the analysis of the locating unit (27) is configured in such a way that the location in the first direction (41) is determined with an interpolated analysis of the output signals of multiple pixels (1) derived according to an intensity of reception, which interpolated analysis combines reflections from those of the pixels (1) which have an substantially equal distance (43), in particular wherein the interpolated analysis is performed using a barycenter formation based on the output signals of a plurality of the pixels (1).

4. Target reflector search device (14s) according to at least one of Claims 1 to 3, **characterized in that** the distance measuring unit (23) is arranged in parallel in such a way that at least one distance (43) is ascertained for each of the pixels (1) which receives the reflection (9).

5. Target reflector search device (14s) according to at least one of Claims 1 to 4, **characterized in that** the locating unit (27) is configured in such a way that the analysis in the second direction (42) is performed with a barycenter formation in dependence on an intensity of reception based on the output signals of the individual pixels (1) for adjacent/different values of the second direction (42).

6. Target reflector search device (14s) according to at least one of Claims 1 to 5, **characterized in that** the locating unit (27) is configured in such a way that a geometric extension in the first direction (41) is ascertained as a height (34) and a geometric extension in the second direction (42) is ascertained as a width (33) of a respective spatially coherent target object (10), which causes the reflection (9).

7. Target reflector search device (14s) according to at least one of Claims 1 to 6, **characterized in that** the locating unit (27) is configured in such a way that the location in the first direction (41), the distance (43), and an intensity of the reflection (9) - optionally together with the location in the second direction (42), the height (34), and/or the width (33) - is ascertained as an at least three-dimensional, spatial intensity distribution.

8. Target reflector search device (14s) according to at least one of Claims 1 to 7, **characterized in that** the locating unit (27) determines a spatial profile of three or more, in particular of up to seven dimensions of the reflection (9) using the location in the first direction (41), the location in the second direction (42), the distance (43), the height (34), the width (33), the intensity of reflection (9), and/or a reflectance of a target object (10) causing the acquired reflection (9), and an automatic target mark recognition and/or target mark identification is performed by the analysis unit based thereon for every received reflection (9).

9. Target reflector search device (14s) according to at least one of Claims 1 to 8, **characterized in that** the optical system (39) is arranged having a detector (11) offset to the rear by a defined offset in relation to a focal plane of the optical unit (4), in particular the pixels (1) of the detector (11) are arranged defocused in relation to a focus of the optical unit (4),
in particular wherein the imaging optical unit (4) and the pixels (1) are configured and arranged in such a way that light from one point from an object space located in front of the imaging optical unit (4) illuminates a surface on the pixels (1) located behind the imaging optical unit (4), which surface is at least approximately equal to or greater than a sensitivity surface of one of the pixels (1).

10. Target reflector search device (14s) according to at least one of Claims 1 to 9, **characterized in that** the optical system (39) comprises a slit aperture (7), which delimits the image field on the fan-shaped acquisition region (20), between the optical unit (4) and the detector (11), and
the optical unit (4) is configured and arranged in such a way that
▪ focusing of an object space of the optical unit (4) is performed in a plane of the slit aperture, and
▪ the pixels (1) are arranged defocused in a defined distance (38) behind the plane of the slit aperture (7),
in particular wherein
▪ the defined distance (38) is selected in such a way that a circle of confusion of the defocusing substantially corresponds to a width of the pixels (1) orthogonal to the linear arrangement of the pixels (1), or
▪ the defined distance (38) is selected in such a way that a circle of confusion due to the defocusing is substantially equal to or greater than a height of one of the pixels (1) along the linear arrangement of the pixels (1).

11. Target reflector search device (14s) according to at least one of Claims 1 to 10, **characterized in that** the optical system (39) is configured comprising an optical diffuser, hologram, or microlens element (3) between the imaging optical unit (4) and the detector (11), in particular wherein the optical system (39) is configured having a diffuser (3) in front of each individual pixel or in front of all of the pixels (1), which is configured in such a way that light (21) incident thereon is distributed substantially homogeneously over a coherent sensitivity region of the pixel (1).

12. Geodetic surveying device (14) having a target reflector search device (14s) according to at least one of Claims 1 to 11, **characterized in that** the geodetic surveying device (14) is configured as a total station, theodolite, tachymeter, laser scanner, or rotation laser, and
the target reflector search device (14s) is arranged in such a way that it is rotatable around a preferably at least substantially vertical rotational axis (V) of the geodetic surveying device (14) as the second direction (42), in particular wherein the target reflector search device (14s) is arranged in a support (14b) of the geodetic surveying device (14).

13. Method for automatically locating a location of a reflective target mark (10) in a spatial region (22), in particular using a target reflector search device (14s) according to any one of Claims 1 to 11, in particular in a geodetic surveying device (14) according to Claim 12, comprising
▪ emitting optical radiation in the form of an emission fan (13) oriented in a first direction (41),
▪ moving the emission fan (13) over the spatial region (22) in a second direction (42),
▪ receiving a reflection (9) of a portion of the optical radiation of the emission fan (13) within a fan-shaped reception region (20),
▪ analyzing the fan-shaped reception region (20) using an optical detector (11), and
▪ determining the location of the reflection (9) on the basis of the analysis and an associated location of the moving in the second direction (42),
**characterized in that**
the optical detector (11) is designed as a position-resolving optical detector (11) having a linear arrangement of a plurality of pixels (1), which pixels (1) are each formed as SPAD arrays, and
the receiving is performed using an optical system (39) having an imaging optical unit (4), wherein the optical system (39) is configured and arranged in such a way that a blurry imaging, which is expanded in relation to focused imaging, of the reflection (9) from the acquisition region (22) onto the position-resolving optical detector (11) is performed.

14. Method according to Claim 13, **characterized in that** a determining of a location in the first direction (41) is performed using an analyzing of an intensity barycenter of the reflection (9) on the position-resolving optical detector (11) over a plurality of the pixels (1), in particular using an interpolated position resolution between the pixels (1).

15. Method according to Claim 13 or 14, **characterized in that** a recognizing of target marks (10) is performed using an analyzing of an at least three-dimensional, spatial intensity profile of reflections (9) in the spatial region (22), in particular in a location of an intensity barycenter of the reflection (9) in the first direction (41), a distance (43) of the reflection (9), and an intensity of the reflection (9),
optionally using an analyzing of a geometrical extension of the reflection (9),
especially wherein an automatic recognition and/or classification of the target mark (10) is performed on the basis of a reflectance of the target mark (10) ascertained from the intensity and the distance of the reflection (9).

## Revendications

1. Dispositif de recherche de réflecteur cible (14s), réalisé pour la détection automatique d'au moins une marque cible réfléchissante (10) avec un appareil d'arpentage géodésique (14), comportant :
- une unité émettrice (8), laquelle émet un rayonnement optique sous forme d'un éventail d'émission (13) orienté le long d'une première direction (41),
- un dispositif motorisé (14m) permettant de déplacer l'éventail d'émission (13) le long d'une deuxième direction (42) au-dessus d'une zone spatiale (19) et permettant la saisie d'une valeur de la deuxième direction (42), de préférence dans lequel la deuxième direction (42) est orientée de manière sensiblement orthogonale à la première direction (41),
- une unité réceptrice (40), laquelle reçoit avec un détecteur optoélectronique (11) des fractions rétroréfléchies du rayonnement optique de l'éventail d'émission (13) comme rétroréflexion (9) à l'intérieur d'une zone de saisie en forme d'éventail (20), laquelle zone de saisie est déplacée conjointement avec l'éventail d'émission (13), et
- une unité de localisation (27), laquelle définit une position de la marque cible (10) avec une évaluation de l'unité réceptrice (40) et de la deuxième direction (42),
**caractérisé en ce que**
le détecteur optoélectronique (11) est réalisé comme détecteur optoélectronique résolu spatialement (11) avec une disposition en lignes de plusieurs pixels (1),
dans lequel les pixels (1) sont réalisés comme unités de saisie d'un réseau SPAD, lesquelles sont réalisées respectivement avec plusieurs photodiodes à avalanche monophotonique, SPAD, par pixel (1), fonctionnant en mode Geiger et interconnectées à un signal de sortie commun, et
l'unité réceptrice (40) comporte un système optique (39) dotée d'une optique d'imagerie (4) à foyer fixe,
dans lequel le système optique (39) et le détecteur optoélectronique (11) sont réalisés et disposés de telle sorte qu'une fraction du rayonnement optique réémise depuis un point dans la zone de saisie (20) est agrandie sur la surface sensible du détecteur optoélectronique (11) de telle sorte qu'une image floue est obtenue.

2. Dispositif de recherche de réflecteur cible (14s) selon la revendication 1, **caractérisé en ce que** l'unité de localisation (27) est réalisée de telle sorte que celle-ci détermine une position de la rétroréflexion (9) dans la première direction (41) avec une évaluation des signaux de sortie des pixels du détecteur (11) et l'unité de localisation (27) comporte une unité de mesure de distance (23), laquelle détermine - en particulier avec une mesure du temps de parcours - une distance (43) par rapport à un objet déclenchant la rétroréflexion (9), en particulier dans lequel l'image floue est obtenue de telle sorte que la fraction réémise du rayonnement optique depuis un point de la zone de réception en forme d'éventail (20) est reçue par plus d'un des pixels (1).

3. Dispositif de recherche de réflecteur cible (14s) selon au moins une des revendications 1 ou 2, **caractérisé en ce que** l'évaluation de l'unité de localisation (27) est réalisée de telle sorte que la position dans la première direction (41) est obtenue avec une évaluation interpolée et déterminée en fonction de l'intensité de réception des signaux de sortie de plusieurs pixels (1), laquelle évaluation interpolée agrège les rétroréflexions de chacun des pixels (1) comportant une distance (43) sensiblement égale, en particulier dans lequel l'évaluation interpolée est obtenue avec une formation de barycentre basée sur les signaux de sortie de plusieurs des pixels (1).

4. Dispositif de recherche de réflecteur cible (14s) selon au moins une des revendications 1 à 3, **caractérisé en ce que** l'unité de mesure de distance (23) est réalisée comme parallèle de telle sorte qu'au moins une distance (43) est déterminée pour chacun des pixels (1) recevant la rétroréflexion (9) .

5. Dispositif de recherche de réflecteur cible (14s) selon au moins une des revendications 1 à 4, **caractérisé en ce que** l'unité de localisation (27) est réalisée de telle sorte que l'évaluation dans la deuxième direction (42) est obtenue avec une formation de barycentre en fonction de l'intensité de réception basée sur les signaux des pixels individuels (1) pour de valeurs différentes/adjacentes de la deuxième direction (42) .

6. Dispositif de recherche de réflecteur cible (14s) selon au moins une des revendications 1 à 5, **caractérisé en ce que** l'unité de localisation (27) est réalisée de telle sorte qu'une étendue géométrique dans la première direction (41) est déterminée en tant que hauteur (34) et une étendue géométrique dans la deuxième direction (42) est déterminée en tant que largeur (33) respective d'un objet cible (10) spatialement continu déclenchant la rétroréflexion (9).

7. Dispositif de recherche de réflecteur cible (14s) selon au moins une des revendications 1 à 6, **caractérisé en ce que** l'unité de localisation (27) est réalisée de telle sorte que la position dans la première direction (41), la distance (43) et une intensité de la rétroréflexion (9) - avec, en option, la position dans la deuxième direction (42), la hauteur (34) et/ou la largeur (33) - sont déterminées en tant que distribution spatiale d'intensité à au moins trois dimensions.

8. Dispositif de recherche de réflecteur cible (14s) selon au moins une des revendications 1 à 7, **caractérisé en ce que** l'unité de localisation (27) définit un profil spatial en trois ou plus, en particulier jusqu'à sept, dimensions de la rétroréflexion (9) avec la position dans la première direction (41), la position dans la deuxième direction (42), la distance (43), la hauteur (34), la largeur (33), l'intensité de la rétroréflexion (9) et/ou d'une réflectivité d'un objet cible (10) déclenchant la rétroréflexion saisie (9), et obtient pour chaque rétroréflexion (9) sur la base de ceux-ci une reconnaissance automatique de marque cible et/ou une identification de marque cible par l'unité d'évaluation.

9. Dispositif de recherche de réflecteur cible (14s) selon au moins une des revendications 1 à 8, **caractérisé en ce que** le système optique (39) est réalisé avec un détecteur (11) décalé vers l'arrière par rapport à un plan focal de l'optique (4) avec un décalage défini, en particulier **en ce que** les pixels (1) du détecteur (11) sont disposés de manière défocalisée par rapport à une focale de l'optique (4), en particulier dans lequel l'optique d'imagerie (4) et les pixels (1) sont réalisés et disposés de telle sorte que la lumière d'un point issu d'un espace d'objet situé devant l'optique d'imagerie (4) éclaire une surface sur les pixels (1) situés derrière l'optique d'imagerie (4), laquelle surface est au moins approximativement de même taille ou plus grande qu'une surface sensible d'un des pixels (1) .

10. Dispositif de recherche de réflecteur cible (14s) selon au moins une des revendications 1 à 9, **caractérisé en ce que** le système optique (39) comporte entre l'optique (4) et le détecteur (11) un diaphragme à fente (7) délimitant le champ visuel sur la zone de saisie en forme d'éventail (20), et l'optique (4) est réalisée et disposée de telle sorte que
- une focalisation d'un espace d'objet de l'optique (4) est obtenu dans un plan du diaphragme à fente, et
- les pixels (1) sont disposés de manière défocalisée avec un écart (38) défini derrière le plan du diaphragme à fente (7),
en particulier dans lequel
- l'écart (38) défini est choisi de telle sorte qu'un cercle de confusion de la défocalisation correspond sensiblement à une largeur des pixels (1) orthogonale à la disposition en lignes des pixels (1), ou
- l'écart (38) défini est choisi de telle sorte qu'un cercle de confusion par la défocalisation est sensiblement de même taille ou plus grand qu'une hauteur d'un des pixels (1) le long de la disposition en lignes des pixels (1).

11. Dispositif de recherche de réflecteur cible (14s) selon au moins une des revendications 1 à 10, **caractérisé en ce que** le système optique (39) est réalisé avec un élément (3) de diffuseur optique, d'hologramme ou de microlentilles entre l'optique (4) et le détecteur (11),
en particulier dans lequel le système optique (39) est réalisé avec un diffuseur (3) devant chaque pixel individuel ou devant tous les pixels (1), lequel est réalisé de telle sorte que de la lumière (21) tombant sur celui-ci est distribuée de manière sensiblement homogène sur une zone sensible continue du pixel (1).

12. Appareil d'arpentage géodésique (14) doté d'un dispositif de recherche de réflecteur cible (14s) selon au moins une des revendications 1 à 11, **caractérisé en ce que** l'appareil d'arpentage géodésique (14) est réalisé comme station totale, théodolite, tachymètre, scanner laser ou laser rotatif, et
le dispositif de recherche de réflecteur cible (14s) est disposé en rotation autour d'un axe de rotation (V), de préférence au moins sensiblement vertical, de l'appareil d'arpentage géodésique (14) comme deuxième direction (42), en particulier dans lequel le dispositif de recherche de réflecteur cible (14s) est disposé dans un support (14b) de l'appareil d'arpentage géodésique (14).

13. Procédé de détection automatique d'une position d'une marque cible réfléchissante (10) dans une zone spatiale (22), en particulier avec un dispositif de recherche de réflecteur cible (14s) selon l'une des revendications 1 à 11, en particulier dans un appareil d'arpentage géodésique (14) selon la revendication 12, avec
- une émission de rayonnement optique sous forme d'un éventail d'émission (13) orienté dans une première direction (41),
- un déplacement de l'éventail d'émission (13) au-dessus de la zone spatiale (22) dans une deuxième direction (42),
- une réception d'une rétroréflexion (9) d'une fraction du rayonnement optique de l'éventail d'émission (13) à l'intérieur d'une zone de réception en forme d'éventail (20),
- une évaluation de la zone de réception en forme d'éventail (20) avec un détecteur optique (11), et
- une définition de la position de la rétroréflexion (9) est obtenue à l'aide de l'évaluation et d'une position associée du mouvement dans la deuxième direction (42),
**caractérisé en ce que**
le détecteur optique (11) est réalisé comme détecteur optique résolu spatialement (11) avec une disposition en lignes de plusieurs pixels (1), lesquels pixels (1) sont réalisés comme réseaux SPAD, et la réception s'effectue avec un système optique (39) doté d'une optique d'imagerie (4), dans lequel le système optique (39) est réalisé et disposé de telle sorte qu'une image floue, élargie par rapport à une image focalisée, de la rétroréflexion (9) est obtenue sur le détecteur optique résolu spatialement (11) à partir de la zone de saisie (22).

14. Procédé selon la revendication 13, **caractérisé en ce qu'**une définition d'une position dans la première direction (41) est obtenue avec une détermination d'un barycentre d'intensité de la rétroréflexion (9) sur le détecteur optique résolu spatialement (11) à travers plusieurs des pixels (1), en particulier avec une résolution de position interpolée entre les pixels (1).

15. Procédé selon la revendication 13 ou 14 **caractérisé en ce qu'**une reconnaissance de marques cibles (10) est obtenue avec une évaluation d'un profil spatial d'intensités de rétroréflexions (9) à au moins trois dimensions dans une zone spatiale (22), en particulier dans une position d'un barycentre d'intensité de la rétroréflexion (9) dans la première direction (41), une distance (43) de la rétroréflexion (9) et une intensité de la rétroréflexion (9),
avec, en option, une évaluation d'une étendue géométrique de la rétroréflexion (9),
spécialement dans lequel une reconnaissance et/ou classification automatique de la marque cible (10) est obtenue à l'aide d'une réflectivité de la marque cible (10) déterminée à partir de l'intensité et de la distance de la rétroréflexion (9).
